(19) Europäisches Patentamt / European Patent Office / Office européen des brevets

(11) **EP 3 214 147 B1**

(12) **EUROPEAN PATENT SPECIFICATION**

(45) Date of publication and mention
of the grant of the patent:
**19.02.2020 Bulletin 2020/08**

(21) Application number: **15854438.7**

(22) Date of filing: **20.10.2015**

(51) Int Cl.:
*C09K 3/00* (2006.01)    *C08K 5/11* (2006.01)
*C08K 7/00* (2006.01)    *C08L 53/02* (2006.01)
*C08L 67/02* (2006.01)

(86) International application number:
**PCT/JP2015/079492**

(87) International publication number:
**WO 2016/067961 (06.05.2016 Gazette 2016/18)**

(54) **POLYESTER RESIN COMPOSITION FOR DAMPING MATERIAL**

POLYESTERHARZZUSAMMENSETZUNG FÜR DÄMPFUNGSMATERIAL

COMPOSITION DE RÉSINE DE POLYESTER POUR AMORTISSEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2014 JP 2014222118
08.06.2015 JP 2015116063**

(43) Date of publication of application:
**06.09.2017 Bulletin 2017/36**

(73) Proprietor: **Kao Corporation
Tokyo 103-8210 (JP)**

(72) Inventors:
• **ODA, Yoshiro
Wakayama-shi
Wakayama 640-8580 (JP)**
• **TSUBOI, Tomoya
Wakayama-shi
Wakayama 640-8580 (JP)**

• **HASEGAWA, Yoshinori
Wakayama-shi
Wakayama 640-8580 (JP)**

(74) Representative: **Hoffmann Eitle
Patent- und Rechtsanwälte PartmbB
Arabellastraße 30
81925 München (DE)**

(56) References cited:
EP-A1- 1 571 176      WO-A1-2014/034636
JP-A- S5 141 080      JP-A- H05 202 287
JP-A- H10 130 451     JP-A- H10 205 576
JP-A- 2000 178 429    JP-A- 2001 220 501
JP-A- 2006 152 020    JP-A- 2007 009 143

• L.H. Sperling: "Chaper 1: Basic Viscoelastic
Definitions and Concepts1-20" In: SPERLING
L.H.: "ACS Symposium Series: Sound and
Vibration Damping with Polymers", 1 May 1990
(1990-05-01), American Chemical Society,
Washington DC USA, XP002778133, pages 5-22,
* page 18 - page 19 * * page 15; figures 15-17 *

**Description**

FIELD OF THE INVENTION

The present invention relates to a polyester resin composition for a vibration-damping material. More specifically, the present invention relates to a vibration-damping material obtainable by molding the polyester resin composition, and use of the material in audio equipment, electric appliances, transportation vehicles, construction buildings, and industrial equipment.

BACKGROUND OF THE INVENTION

In the recent years, vibration countermeasures for various kinds of equipment are in demand, and especially, vibration countermeasures are needed in fields such as automobiles, domestic electric appliances, and precision instruments. In general, materials having high vibration-damping properties include composite materials such as materials obtained by pasting a metal plate with a vibration-absorbable material such as a rubber and asphalt, a vibration damping steel plate in which a vibration-absorbable material is interposed between metal plates. These vibration-damping materials retain their shapes with a high-rigidity metal plate and absorb vibrations with a vibration-absorbable material. Also, in a case of metals alone, a vibration-damping material includes an alloy material that absorbs vibrations by converting kinetic energy to thermal energy utilizing twinning or ferromagnetic property. However, there were some disadvantages that since composite materials paste together different materials, there are limitations in mold processability, and also that a metal steel plate is used, so that the manufactured article itself becomes heavy. In addition, the alloy material was heavy because only metals were used, and further it was insufficient in vibration-damping properties.

In view of the prior art as mentioned above, as a functional resin composition that has a vibration-damping function and also other general physical properties, for example, Patent Publication 1 discloses that a material having excellent vibration damping property and excellent toughness is obtained by blending a crystalline thermoplastic polyester resin as a main component, a specified polymer selected from polyester elastomers and thermoplastic polyurethanes, and further glass fibers having a specified shape.

In addition, Patent Publication 2 discloses that as a vibration-damping material using an environmental-friendly polylactic acid resin, a molded article obtained by including a specified amount of a styrene-isoprene block copolymer based on a polylactic acid resin having a specified melt flow rate has excellent vibration-damping property. Polyester-based damping compositions containing (i) isoprene-styrene block copolymers are disclosed in JP-A-2007009143A and (ii) plasticisers are disclosed in JP-A-10-205576.

Patent Publication 1: Japanese Patent Laid-Open No. Hei-3-263457
Patent Publication 2: WO 2014/034636

SUMMARY OF THE INVENTION

The present invention is (1) as defined by the present claims

[2] A vibration-damping material containing a polyester resin composition as defined in the above [1].
[3] Use of a polyester resin composition as defined in the above [1] as a vibration-damping material.
[4] A manufactured article selected from audio equipment, electric appliances, transportation vehicles, construction buildings, and industrial equipment, obtainable by molding a polyester resin composition as defined in the above [1], or parts or housing thereof.
[5] A method for producing parts or housing, as defined in the present claims.

BRIEF DESCRIPTION OF THE DRAWINGS

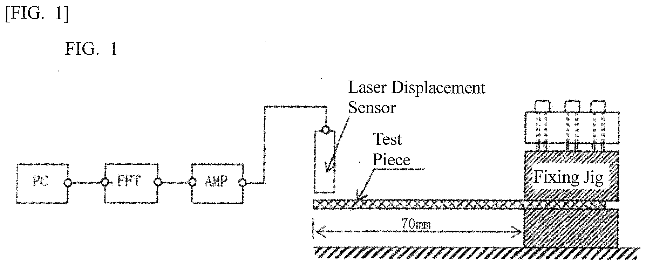

[FIG. 1] FIG. 1 is a view showing a jig used in the measurement of loss tangent.

DETAILED DESCRIPTION OF THE INVENTION

As resin compositions which can replace various kinds of vibration-damping materials, further improvements in conventional polyester resin compositions are needed. In other words, the development of a polyester resin composition capable of not only making damping of vibration faster to improve vibration-damping property, but also making an initial vibrating width of the vibrations smaller is in demand.

The present invention relates to a polyester resin composition for a vibration-damping material having excellent vibration-damping property even while a flexural modulus is high, and a vibration-damping material containing the polyester resin composition.

Since the polyester resin composition of the present invention has a shorter vibration time even while having a high flexural modulus, generated vibrations are damped by using the polyester resin composition in housing or parts of surroundings of the generation sources for vibrations and sounds in the manufactured article equipment, apparatus, or a building construction that generates vibration or sounds, or placing the material on the generation sources, whereby consequently exhibit some excellent effects of reducing extraneous vibrations related to manufactured articles or apparatus properties, or reducing unpleasant vibrations, sounds or noises.

In general, when an inorganic filler is added to a resin, while the modulus of the overall resin composition is improved, loss tangent thereof would be lowered. The lowering of this loss tangent is caused by reduction in the amount of energy loss in the resin moiety because the proportion of the resin in the resin composition is reduced by the addition of the filler. In view of the above, in the present invention, a plasticizer and/or a styrene-isoprene block copolymer is added to the above system, to give flexibility and to more likely cause energy loss, thereby improving loss tangent, whereby making it possible to inhibit the lowering of loss tangent, while increasing the modulus of the resin composition. Further, in the polyester resin composition of the present invention, it is assumed that frictions are generated at the interfaces between a resin or a plasticizer and/or a styrene-isoprene block copolymer and an inorganic filler, and energy loss takes place, so that the lowering of loss tangent is even more inhibited.

[Polyester Resin Composition]

[Thermoplastic Polyester Resin (A)]

The thermoplastic polyester resin (A) in the present invention is constituted of a dicarboxylic acid component and a diol component, and can be obtained by a combination of polycondensation of a dicarboxylic acid component and a diol component. The dicarboxylic acid component as used herein includes dicarboxylic acids and lower ester derivatives thereof, which are collectively referred to as a dicarboxylic acid component.

As the dicarboxylic acid component constituting the thermoplastic polyester resin (A), an aliphatic dicarboxylic acid, an alicyclic dicarboxylic acid, an aromatic dicarboxylic acid, or a dicarboxylic acid having a furan ring can be used. Specific examples of the aliphatic dicarboxylic acid are preferably an aliphatic dicarboxylic acid having a total number of carbon atoms of from 2 to 26, including, for example, malonic acid, succinic acid, glutaric acid, adipic acid, suberic acid, sebacic acid, dodecanedionic acid, dimeric acid, eicosanedionic acid, pimelic acid, azelaic acid, methylmalonic acid, and ethylmalonic acid. The alicyclic dicarboxylic acid is preferably an alicyclic dicarboxylic acid having a total number of carbon atoms of from 5 to 26, including, for example, adamantanedicarboxylic acid, norbornene dicarboxylic acid, cyclohexanedicarboxylic acid, and decalin dicarboxylic acid. The aromatic dicarboxylic acid is preferably an aromatic dicarboxylic acid having a total number of carbon atoms of from 8 to 26, including, for example, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyl ether dicarboxylic acid, sodium 5-sulfoisophthalate, phenylindane dicarboxylic acid, anthracenedicarboxylic acid, phenanthrene dicarboxylic acid, and 9,9'-bis(4-carboxyphenyl)fluorenic acid. The dicarboxylic acid having a furan ring is preferably a dicarboxylic acid having a furan ring and having a total number of carbon atoms of from 6 to 26, including, for example, 2,5-furandicarboxylic acid. These dicarboxylic acid components can be used alone or in a combination of two or more kinds. Among them, one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred, from the viewpoint of improving a glass transition temperature (Tg) and improving rigidity of the thermoplastic polyester resin (A).

As the diol component constituting the thermoplastic polyester resin (A), an aliphatic diol, an alicyclic diol, an aromatic diol, or a diol having a furan ring can be used. Specific examples of the aliphatic diol are preferably an aliphatic diol having a total number of carbon atoms of from 2 to 26 and a polyalkylene glycol, including, for example, ethylene glycol, 1,2-propanediol, 1,3-propanediol, 1,4-butanediol, 1,2-butanediol, 1,3-butanediol, neopentyl glycol, 1,5-pentanediol, 1,6-hexanediol, diethylene glycol, triethylene glycol, polyethylene glycol, and polypropylene glycol. The alicyclic diol is preferably an alicyclic diol having a total number of carbon atoms of from 3 to 26, including, for example, cyclohexanedimethanol, hydrogenated bisphenol A, spiro-glycol, and isosorbide. The aromatic diol is preferably an aromatic diol having a total number of carbon atoms of from 6 to 26, including, for example, bisphenol A, an alkylene oxide adduct of bisphenol A, 1,3-benzenedimethanol, 1,4-benzenedimethanol, 9,9'-bis(4-hydroxyphenyl)fluoren, and 2,2'bis(4'-β-hydroxyethoxyphenyl)propane. The diol having a furan ring is preferably a diol having a furan ring and having a total number of carbon atoms of from 4 to 26, including, for example, 2,5-dihydroxyfuran. These diol components can be used alone or in a combination of two or more kinds. Among them, one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran are more preferred, from the viewpoint of improving vibration-damping property.

In addition, as the combination of the dicarboxylic acid component and the diol component, it is preferable that one or both of the dicarboxylic acid or the diol include an aromatic ring, alicyclic ring, or a furan ring, from the viewpoint of improving Tg and improving rigidity of the thermoplastic polyester resin (A). Specific examples, in a case where the dicarboxylic acid component is one or more members selected from the group consisting of aromatic dicarboxylic acids, alicyclic dicarboxylic acids, and dicarboxylic acids having a furan ring, are preferably a combination with one or more members selected from the group consisting of aliphatic diols, aromatic diols, alicyclic diols, and diols having a furan ring, and more preferably a combination with one or more members selected from the group consisting of aliphatic diols and aromatic diols. Specific examples, in a case where the dicarboxylic acid component is an aliphatic dicarboxylic acid, are preferably a combination with one or more members selected from the group consisting of aromatic diols, alicyclic diols, and diols having a furan ring, and more preferably a combination with one or more members of aromatic diols.

The polycondensation of the above dicarboxylic acid component and the above diol component can be carried out in accordance with a known method, but not particularly limited thereto.

The thermoplastic polyester resin (A) obtained, when processed as an extrusion molded article, an injection-molded article, such as a film or a sheet, or a thermoformed article, has a glass transition temperature (Tg) of preferably 20°C or higher, more preferably 25°C or higher, even more preferably 30°C or higher, and still even more preferably 35°C or higher, from the viewpoint of giving rigidity capable of supporting its own shape and improving mold processability, and from the viewpoint of improving heat resistance. Also, the thermoplastic polyester resin has a glass transition temperature of preferably 160°C or lower, more preferably 150°C or lower, even more preferably 140°C or lower, and still even more preferably 130°C or lower, from the viewpoint of improving vibration-damping property. In order that the glass transition temperature is to be the above temperature, it is effective to control the backbone structure of the polyester resin. For example, when the thermoplastic polyester resin is prepared using as raw materials a rigid component such as an aromatic dicarboxylic acid component or an alicyclic diol component, it is possible to increase the glass transition temperature. Here, the glass transition temperatures of the resins and the elastomers as used herein can be measured in accordance with a method described in Examples set forth below.

In addition, it is preferable that a thermoplastic polyester resin (A) in the present invention has crystallinity. Generally, since there are some differences in elastic moduli between the crystalline portions and the amorphous portions of the resin, a resin matrix comprising only an amorphous portion or a crystalline portion has smaller energy loss to vibration without causing large strains because of its homogeneous structure. On the other hand, in a resin matrix comprising a mixture of crystalline portions and amorphous portions, inhomogeneous continuous morphologies having different elastic moduli are formed, so that when vibration is applied, large strains are locally generated in the amorphous portions having lower elastic moduli, whereby consequently generating shearing frictions based on strains to improve energy loss. Accordingly, it is considered that the thermoplastic polyester resin generally contains larger proportions of amorphous portions, but the thermoplastic polyester resin has crystallinity in the present invention, so that it is possible to even more improve energy loss of the resin matrix. In addition, it is assumed that since the plasticizer and/or styrene-isoprene block copolymer (B) is dispersed in the present invention, the amorphous portion is made flexible or given flexibility with the above component (B), and the elastic modulus is even more lowered to increase the above effects; therefore, loss tangent is even more increased, whereby a polyester resin composition having more excellent vibration-damping property can be obtained. The method for preparing a thermoplastic polyester resin having crystallinity includes a method of using a thermoplastic polyester resin of which dicarboxylic acid component and diol component have high purity, and a method of using a dicarboxylic acid component and diol component having a smaller side chain. Here, a resin having crystallinity as used herein refers to a resin in which exothermic peaks accompanying crystallization are observed when a resin is heated from 25°C to 300°C at a heating rate of 20°C/min, held in that state for 5 minutes, and thereafter cooled to 25°C or lower at a rate of -20°C/min, as prescribed in JIS K7122 (1999). More specifically, the resin refers to a resin having crystallization enthalpy $\Delta Hmc$ obtained from areas of exothermic peaks of 1 J/g or more. As the thermoplastic polyester resin (A) constituting the present invention, it is preferable that a resin having a crystallization enthalpy $\Delta Hmc$ of preferably 5 J/g or more, more preferably 10 J/g or more, even more preferably 15 J/g or more, and even more preferably 30 J/g or more is used.

Specific examples of the thermoplastic polyester resin (A) are preferably a polyethylene terephthalate constituted of terephthalic acid and ethylene glycol (PET resin, Tg: 70°C), a polytrimethylene terephthalate constituted of

4

terephthalic acid and 1,3-propanediol (PTT resin, Tg: 50°C), a polybutylene terephthalate constituted of terephthalic acid and 1,4-butanediol (PBT resin, Tg: 50°C), 1,4-cyclohexanedimethylene terephthalate constituted of terephthalic acid and 1,4-cyclohexanedimethanol (PCT resin, Tg: 95°C), polyethylene naphthalate constituted of 2,6-naphthalenedicarboxylic acid and ethylene glycol (PEN resin, Tg: 121°C), a polybutylene naphthalate constituted of 2,6-naphthalenedicarboxylic acid and 1,4-butanediol (PBN resin, Tg: 78°C), a polyethylene furanoate constituted of 2,5-furandicarboxylic acid and ethylene glycol (PEF resin, Tg: 87°C), a polybutylene furanoate constituted of 2,5-furandicarboxylic acid and 1,4-butanediol (PBF resin, Tg: 35°C), and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, a polyethylene furanoate constituted of 2,5-furandicarboxylic acid and ethylene glycol, from the viewpoint of rigidity, heat resistance, and vibration-damping property. These can be used alone or in a combination of two or more kinds.

The content of the thermoplastic polyester resin (A) is preferably 30% by mass or more, more preferably 40% by mass or more, even more preferably 50% by mass or more, even more preferably 55% by mass or more, and even more preferably 60% by mass or more, of the polyester resin composition, from the viewpoint of improving loss tangent. In addition, the content is preferably 90% by mass or less, more preferably 80% by mass or less, even more preferably 75% by mass or less, and even more preferably 70% by mass or less, from the viewpoint of improving elastic modulus.

[Plasticizer and/or Styrene-Isoprene Block Copolymer (B)]

The component (B) is as defined in the present claims.

(Plasticizer)

It is preferable that the plasticizer in the present invention contains one or more members selected from the group consisting of polyester-based plasticizers, polyhydric alcohol ester-based plasticizers, polycarboxylic acid ester-based plasticizers, and bisphenol-based plasticizers.

Specific examples of the polyester-based plasticizers include polyesters obtained from a dicarboxylic acid having preferably from 2 to 12 carbon atoms, and more preferably from 2 to 6 carbon atoms, and a di-alcohol or a (poly)oxyalkylene adduct thereof having preferably from 2 to 12 carbon atoms, and more preferably from 2 to 6 carbon atoms, and the like. The dicarboxylic acid includes succinic acid, adipic acid, sebacic acid, phthalic acid, terephthalic acid, isophthalic acid, and the like, and the di-alcohol includes propylene glycol, 1,3-butanediol, 1,4-butanediol, 1,6-hexanediol, ethylene glycol, diethylene glycol, triethylene glycol, and the like. In addition, a hydroxyl group or a carboxy group at a polyester terminal may be esterified with a monocarboxylic acid or a mono-alcohol to cap.

Specific examples of the polyhydric alcohol ester-based plasticizer include mono-, di- or triesters of a polyhydric alcohol or a (poly)oxyalkylene adduct thereof, and a monocarboxylic acid having preferably from 1 to 12 carbon atoms, more preferably from 1 to 6 carbon atoms, and even more preferably from 1 to 4 carbon atoms, or the like. The polyhydric alcohol includes polyethylene glycols, polypropylene glycols, glycerol, the above di-alcohols, and the like. The monocarboxylic acid includes acetic acid, propionic acid, and the like.

The polycarboxylic acid ester-based plasticizer includes mono-, di- or triesters of a polycarboxylic acid, and a mono-alcohol or a (poly)oxyalkylene adduct thereof having preferably from 1 to 12 carbon atoms, more preferably from 1 to 6 carbon atoms, and even more preferably from 1 to 4 carbon atoms, or the like. The polycarboxylic acid includes trimellitic acid, the above dicarboxylic acids, and the like. The mono-alcohol includes methanol, ethanol, 1-propanol, 1-butanol, 2-ethylhexanol, and the like.

The bisphenol-based plasticizer includes mono- or diethers obtained from a bisphenol and a monoalkyl halide or a (poly)oxyalkylene adduct thereof, having preferably from 1 to 18 carbon atoms, more preferably from 2 to 14 carbon atoms, even more preferably from 4 to 10 carbon atoms, or the like. The bisphenol includes bisphenol A, bisphenol S, and the like. The monoalkyl halide includes 1-octyl bromide, 1-dodecyl bromide, 2-ethylhexyl bromide, and the like.

The plasticizer preferably contains one or more members selected from the group consisting of polyester-based plasticizers, polyhydric alcohol ester-based plasticizers, polycarboxylic acid ester-based plasticizers, and bisphenol-based plasticizers, each having a (poly)oxyalkylene group or an alkylene group having from 2 to 10 carbon atoms, and more preferably one or more members selected from the group consisting of polyester-based plasticizers, polyhydric alcohol ester-based plasticizers, polycarboxylic acid ester-based plasticizers, and bisphenol-based plasticizers, each having a (poly)oxyalkylene group, from the viewpoint of improving loss tangent. Here, the (poly)oxyalkylene group means an oxyalkylene group or a polyoxyalkylene group. The oxyalkylene group has an alkylene group having preferably from 2 to 10 carbon atoms, more preferably from 2 to 6 carbon atoms, and even more preferably from 2 to 4 carbon atoms, and an oxyethylene group, an oxypropylene group or an oxybutylene group is even more preferred, and an oxyethylene group or an oxypropylene group is still even more preferred.

From the viewpoint of improving loss tangent, the plasticizer preferably contains one or more members selected from the group consisting of the following Compound Groups (A) to (C), and more preferably one or more members selected from the group consisting of the following Compound Groups (A) and (B). When two or more members are used in combination, the compounds may belong to the same Compound Group, or different Compound Groups. Compound Group (A): an ester compound containing two or more ester groups in the molecule, wherein at least one kind of the alcohol component constituting the ester compound is an adduct of an alcohol reacted with an alkylene oxide having from 2 to 3 carbon atoms in an amount of from 0.5 to 5 mol on average, per one hydroxyl group; Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different, and that all of $R^3$'s may be identical or different; and Compound Group (C): an ester compound having two or more ester groups in the molecule, wherein the alcohol component constituting the ester compound is a mono-alcohol.

Compound Group (A)

It is preferable that the ester compound contained in Compound Group (A) is a polyhydric alcohol ester or a polycarboxylic acid ether ester having two or more ester groups in the molecule, wherein at least one kind of the alcohol component constituting the ester compound is preferably an ester compound which is an adduct of an alcohol reacted with an alkylene oxide having from 2 to 3 carbon atoms in an amount of from 0.5 to 5 mol on average, per one hydroxyl group.

Specific examples of the compound are preferably esters obtained from acetic acid and an adduct of glycerol reacted with ethylene oxide in an amount of from 3 to 6 mol on average (reacted with ethylene oxide in an amount of from 1 to 2 mol per one hydroxyl group); esters obtained from acetic acid and a polyethylene glycol reacted with ethylene oxide in an amount of from 4 to 6 mol on average; esters obtained from succinic acid and a polyethylene glycol monomethyl ether reacted with ethylene oxide in an amount of from 2 to 3 mol on average (reacted with ethylene oxide in an amount of from 2 to 3 mol per one hydroxyl group);
esters obtained from adipic acid and diethylene glycol monomethyl ether; esters obtained from terephthalic acid and a polyethylene glycol monomethyl ether reacted with ethylene oxide in an amount of from 2 to 3 mol on average (reacted with ethylene oxide in an amount of from 2 to 3 mol per one hydroxyl group); and
esters obtained from 1,3,6-hexanetricarboxylic acid and diethylene glycol monomethyl ether.

Compound Group (B)

$R^1$ in the formula (I) is an alkyl group having from 1 to 4 carbon atoms, and two of them are present in one molecule, both at the terminals of the molecule. $R^1$ may be linear or branched, so long as the number of carbon atoms is from 1 to 4. The number of carbon atoms of the alkyl group is preferably from 1 to 4, and more preferably from 1 to 2, from the viewpoint of exhibiting coloration resistance and plasticizing effect. Specific examples include a methyl group, an ethyl group, a propyl group, an isopropyl group, a butyl group, a sec-butyl group, a tert-butyl group, and an iso-butyl group, among which a methyl group and an ethyl group are preferred, and a methyl group is more preferred, from the viewpoint of improving loss tangent.

$R^2$ in the formula (I) is an alkylene group having from 2 to 4 carbon atoms, and preferred examples include linear alkylene groups. Specific examples include an ethylene group, a 1,3-propylene group, and a 1,4-butylene group. An ethylene group, a 1,3-propylene group, and a 1,4-butylene group are preferred, and an ethylene group is more preferred, from the viewpoint of improving loss tangent. Here, all the $R^2$'s may be identical or different.

$R^3$ in the formula (I) is an alkylene group having from 2 to 6 carbon atoms, and $OR^3$ exists in the repeating unit as an oxyalkylene group. $R^3$ may be linear or branched so long as the alkylene group has from 2 to 6 carbon atoms. The number of carbon atoms of the alkylene group is preferably from 2 to 6, and more preferably from 2 to 3, from the viewpoint of improving loss tangent. Specific examples include an ethylene group, a 1,2-propylene group, a 1,3-propylene group, a 1,2-butylene group, a 1,3-butylene group, a 1,4-butylene group, a 2-methyl-1,3-propylene group, a 1,2-pentylene group, a 1,4-pentylene group, a 1,5-pentylene group, a 2,2-dimethyl-1,3-propylene group, a 1,2-hexylene group, a 1,5-hexylene group, a 1,6-hexylene group, a 2,5-hexylene group, and a 3-methyl-1,5-pentylene group, among which an ethylene group, a 1,2-propylene group, and a 1,3-propylene group are preferred. Here, all the $R^3$'s may be identical or different.

m is an average number of repeats of an oxyalkylene group, and m is preferably the number of preferably from

EP 3 214 147 B1

1 to 6, more preferably the number of from 1 to 4, and even more preferably the number of from 1 to 3, from the viewpoint of heat resistance.

n is an average number of repeats of repeating units, i.e. an average degree of polymerization, and n is the number of from 1 to 12. n is preferably the number of from 1 to 12, more preferably the number of from 1 to 6, and even more preferably the number of from 1 to 5, from the viewpoint of improving loss tangent. The average degree of polymerization may be obtained by an analysis such as NMR, but the average degree of polymerization can be calculated in accordance with the method described in Examples set forth below.

Specific examples of the compound represented by the formula (I) are preferably compounds in which all the $R^1$'s are methyl groups, $R^2$ is an ethylene group or a 1,4-butylene group, $R^3$ is an ethylene group or a 1,3-propylene group, m is the number of from 1 to 4, and n is the number of from 1 to 6, and more preferably compounds in which all the $R^1$'s are methyl groups, $R^2$ is an ethylene group or a 1,4-butylene group, $R^3$ is an ethylene group or a 1,3-propylene group, m is the number of from 1 to 3, and n is the number of from 1 to 5.

The compound represented by the formula (I) is not particularly limited so long as the compound has the structure mentioned above, and those obtained using the following raw materials (1) to (3) are preferred. Here, (1) and (2), or (2) and (3) may form ester compounds. (2) may be an acid anhydride or an acid halide.

(1) Monohydric Alcohol Containing Alkyl Group Having from 1 to 4 Carbon Atoms
(2) Dicarboxylic Acid Containing Alkylene Group Having from 2 to 4 Carbon Atoms
(3) Dihydric Alcohol Containing Alkylene Group Having from 2 to 6 Carbon Atoms

(1) Monohydric Alcohol Containing Alkyl Group Having from 1 to 4 Carbon Atoms

The monohydric alcohol containing an alkyl group having from 1 to 4 carbon atoms is an alcohol including $R^1$ as defined above, and specific examples include methanol, ethanol, 1-propanol, 2-propanol, 1-butanol, 2-butanol, 2-methyl-1-propanol, and tert-butanol. Among them, methanol, ethanol, 1-propanol, and 1-butanol are preferred, methanol and ethanol are more preferred, and methanol is even more preferred, from the viewpoint of improving loss tangent.

(2) Dicarboxylic Acid Containing Alkylene Group Having from 2 to 4 Carbon Atoms

The dicarboxylic acid containing an alkylene group having from 2 to 4 carbon atoms is a dicarboxylic acid including $R^2$ as defined above, and specific examples include succinic acid, glutaric acid, adipic acid, and derivatives thereof, e.g. succinic anhydride, glutaric anhydride, dimethyl succinate, dibutyl succinate, dimethyl glutarate, dimethyl adipate, and the like. Among them, succinic acid, adipic acid and derivatives thereof, e.g. succinic anhydride, dimethyl succinate, dibutyl succinate, and dimethyl adipate are preferred, and succinic acid and derivatives thereof, e.g. succinic anhydride, dimethyl succinate, and dibutyl succinate are more preferred, from the viewpoint of improving loss tangent.

(3) Dihydric Alcohol Containing Alkylene Group Having from 2 to 6 Carbon Atoms

The dihydric alcohol containing an alkylene group having from 2 to 6 carbon atoms is a dihydric alcohol including $R^3$ as defined above, and specific examples include ethylene glycol, diethylene glycol, triethylene glycol, tetraethylene glycol, 1,2-propanediol, 1,3-propanediol, 2-methyl-1,3-propanediol, 2,2-dimethyl-1,3-propanediol, 1,2-butanediol, 1,3-butanediol, 1,4-butanediol, 1,2-pentanediol, 1,4-pentanediol, 1,5-pentanediol, 2,5-hexanediol, 1,6-hexanediol, and 3-methyl-1,5-pentanediol. Among them, diethylene glycol, triethylene glycol, 1,2-propanediol, 1,3-propanediol, tetraethylene glycol, and 1,4-butanediol are preferred, diethylene glycol, triethylene glycol, 1,2-propanediol, and 1,3-propanediol are more preferred, and diethylene glycol, triethylene glycol, and 1,3-propanediol are even more preferred, from the viewpoint of improving loss tangent.

Accordingly, as the above (1) to (3),
it is preferable that (1) the monohydric alcohol is one or more members selected from the group consisting of methanol, ethanol, 1-propanol, and 1-butanol, that (2) the dicarboxylic acid is one or more members selected from the group consisting of succinic acid, adipic acid, glutaric acid, and derivatives thereof, and that (3) the dihydric alcohol is one or more members selected from the group consisting of diethylene glycol, triethylene glycol, 1,2-propanediol, 1,3-propanediol, tetraethylene glycol, and 1,4-butanediol;
it is more preferable that (1) the monohydric alcohol is one or more members selected from the group consisting of methanol and ethanol, that (2) the dicarboxylic acid is one or more members selected from the group consisting of succinic acid, adipic acid, and derivatives thereof, and that (3) the dihydric alcohol is one or more members selected from the group consisting of diethylene glycol, triethylene glycol, 1,2-propanediol, and 1,3-propanediol; and
it is even more preferable that (1) the monohydric alcohol is methanol, that (2) the dicarboxylic acid is one or more members selected from the group consisting of succinic acid and derivatives thereof, and that (3) the dihydric alcohol is one or more members selected from the group consisting of diethylene glycol, triethylene glycol, and 1,3-propanediol.

The method for obtaining an ester compound represented by the formula (I) by reacting the above (1) to (3) is not particularly limited, and the method includes, for example, the methods of the following Embodiment 1 and Embodiment 2:

Embodiment 1: a method including the steps of carrying out an esterification reaction between (2) the dicarboxylic acid and (1) the monohydric alcohol to synthesize a dicarboxylic acid ester; and carrying out an esterification reaction between the dicarboxylic acid ester obtained and (3) the dihydric alcohol; and

Embodiment 2: a method including the step of allowing to react (1) the monohydric alcohol, (2) the dicarboxylic acid, and (3) the dihydric alcohol at one time.

Among these methods, the method of Embodiment 1 is preferred, from the viewpoint of adjusting an average degree of polymerization. Here, the reactions of each of the steps mentioned above can be carried out in accordance with a known method.

The acid value of the compound represented by the formula (I) is preferably 1.50 mgKOH/g or less, and more preferably 1.00 mgKOH/g or less, from the viewpoint of improving loss tangent, and the hydroxyl value is preferably 10.0 mgKOH/g or less, more preferably 5.0 mgKOH/g or less, and even more preferably 3.0 mgKOH/g or less, from the viewpoint of improving loss tangent. The acid value and the hydroxyl value of the plasticizer as used herein can be measured in accordance with the methods described in Examples set forth below.

In addition, the number-average molecular weight of the compound represented by the formula (I) is preferably from 300 to 1,500, and more preferably from 300 to 1,000, from the viewpoint of improving loss tangent, and from the viewpoint of coloration resistance. The number-average molecular weight of the plasticizer as used herein can be calculated in accordance with the method described in Examples set forth below.

The saponification value of the compound represented by the formula (I) is preferably from 500 to 800 mgKOH/g, and more preferably from 550 to 750 mgKOH/g, from the viewpoint of improving loss tangent. The saponification value of the plasticizer as used herein can be measured in accordance with the method described in Examples set forth below.

The alkyl esterification percentage based on the two molecular terminals (terminal alkyl esterification percentage) of the compound represented by the formula (I) is preferably 95% or more, and more preferably 98% or more, from the viewpoint of improving loss tangent. The terminal alkyl esterification percentage of the plasticizer as used herein can be calculated in accordance with the method described in Examples set forth below.

The ether group value of the compound represented by the formula (I) is preferably from 0 to 8 mmol/g, and more preferably from 0 to 6 mmol/g, from the viewpoint of shortening the vibration time. The ether group value of the plasticizer as used herein can be calculated in accordance with the method described in Examples set forth below.

Compound Group (C)

Specific examples of the ester compounds included in Compound Group (C) are preferably an ester obtained from adipic acid and 2-ethylhexanol (Example: DOA), an ester obtained from phthalic acid and 2-ethylhexanol (Example: DOP).

The content of one or more members selected from the group consisting of polyester-based plasticizers, polyhydric alcohol ester-based plasticizers, polycarboxylic acid ester-based plasticizers, and bisphenol-based plasticizers, preferably the content of one or more members selected from the group consisting of polyester-based plasticizers, polyhydric alcohol ester-based plasticizers, polycarboxylic acid ester-based plasticizers, and bisphenol-based plasticizers, each having a (poly)oxyalkylene group or an alkylene group having from 2 to 10 carbon atoms, more preferably the content of one or more members selected from the group consisting of polyester-based plasticizers, polyhydric alcohol ester-based plasticizers, polycarboxylic acid ester-based plasticizers, and bisphenol-based plasticizers, each having a (poly)oxyalkylene group, and even more preferably the content of one or more compounds selected from the group consisting of Compound Groups (A) to (C) mentioned above is preferably 50% by mass or more, more preferably 80% by mass or more, even more preferably 90% by mass or more, even more preferably 95% by mass or more, even more preferably substantially 100% by mass, and even more preferably 100% by mass, of the plasticizer, from the viewpoint of improving loss tangent. The phrase substantially 100% by mass as used herein refers to a state in which impurities and the like are inevitably contained in a trace amount. The above-mentioned content of the plasticizer as used herein means a total content when plural compounds are contained.

The content of the plasticizer, based on 100 parts by mass of the thermoplastic polyester resin (A), is preferably 1 part by mass or more, more preferably 3 parts by mass or more, even more preferably 5 parts by mass or more, even more preferably 10 parts by mass or more, even more preferably 15 parts by mass or more, and even more preferably 18 parts by mass or more, from the viewpoint of improving loss tangent, and the content is preferably 50 parts by mass or less, more preferably 40 parts by mass or less, even more preferably 30 parts by mass or less, and even more preferably 25 parts by mass or less, from the viewpoint of suppressing the lowering of flexural modulus.

In addition, the content of the plasticizer in the polyester resin composition is preferably 1% by mass or more, more preferably 3% by mass or more, even more preferably 5% by mass or more, even more preferably 8% by mass or more, and still even more preferably 10% by mass or more, from the viewpoint of improving loss tangent, and the content is preferably 25% by mass or less, more preferably 20% by mass or less, and even more preferably 15% by mass or less, from the viewpoint of suppressing the lowering of flexural modulus.

(Styrene-Isoprene Block Copolymer)

The styrene-isoprene block copolymer in the present invention is a block copolymer that has a polystyrene block at both the terminals, and at least one of the blocks of polyisoprene block or vinyl-polyisoprene block. In addition, the block copolymer may be copolymerized with an isoprene block or butadiene block, or may have a hydrogenated structure.

Specific examples of the styrene-isoprene block copolymer mentioned above include, for example, polystyrene-isoprene block copolymers (SIS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These copolymers can be used alone, or in a combination of two or more kinds. In the present invention, among them, it is preferable to use the polystyrene-vinyl-polyisoprene-polystyrene block copolymers, and a commercially available product of the block copolymer as mentioned above includes "HYBRAR" Series, manufactured by Kuraray Plastics Co., Ltd.

The styrene content is preferably 10% by mass or more, and more preferably 15% by mass or more, and preferably 30% by mass or less, and more preferably 25% by mass or less, of the styrene-isoprene block copolymer, from the viewpoint of improving vibration-damping properties at high-temperature ranges and low-temperature ranges. Here, the high-temperature ranges mean a temperature of from 35° to 80°C, and the low-temperature ranges mean a temperature of from -20° to 10°C, and the styrene content in the copolymer can be measured in accordance with a method described in Examples set forth below.

In addition, the styrene-isoprene block copolymer has a glass transition temperature Tg of preferably -40°C or higher, and preferably 20°C or lower, from the viewpoint of improving vibration-damping properties at high-temperature ranges and low-temperature ranges.

The content of the styrene-isoprene block copolymer is, based on 100 parts by mass of the thermoplastic polyester resin (A), preferably 10 parts by mass or more, more preferably 15 parts by mass or more, even more preferably 18 parts by mass or more, even more preferably 20 parts by mass or more, and even more preferably 25 parts by mass or more, from the viewpoint of improving loss tangent at low-temperature ranges. In addition, the content is preferably 50 parts by mass or less, more preferably 40 parts by mass or less, and even more preferably 35 parts by mass or less, from the viewpoint of suppressing the lowering of flexural modulus.

In addition, the content of the styrene-isoprene block copolymer in the polyester resin composition is preferably 5% by mass or more, more preferably 10% by mass or more, and even more preferably 15% by mass or more, from the viewpoint of improving loss tangent, and the content is preferably 30% by mass or less, more preferably 25% by mass or less, and even more preferably 20% by mass or less, from the viewpoint of suppressing the lowering of flexural modulus.

In the present invention, as the component (B), the plasticizer and the styrene-isoprene block copolymer may be used together, or the plasticizer which may be used alone or two or more kinds, can be used in a combination with the styrene-isoprene block copolymer which may be used alone or two or more kinds.

A total content of the plasticizer and the styrene-isoprene block copolymer when used together, based on 100 parts by mass of the thermoplastic polyester resin (A), is preferably 15 parts by mass or more, more preferably 20 parts by mass or more, and even more preferably 25 parts by mass or more, from the viewpoint of improving loss tangent. Also, the total content is preferably 60 parts by mass or less, more preferably 50 parts by mass or less, and even more preferably 40 parts by mass or less, from the viewpoint of suppressing the lowering of elastic modulus.

The mass ratio of the plasticizer to the styrene-isoprene block copolymer when used together, i.e. plasticizer/styrene-isoprene block copolymer, is preferably from 30/70 to 70/30, and more preferably from 40/60 to 60/40, from the viewpoint of suppressing the lowering of elastic modulus.

[Inorganic Filler (C)]

The polyester resin composition of the present invention contains an inorganic filler (C), from the viewpoint of improving flexural modulus. The inorganic filler (C) in the present invention is not particularly limited, so long as it is a known inorganic filler, and specifically, one or more members selected from the group consisting of plate-like fillers, granular fillers, acicular fillers, and fibrous fillers, that are ordinarily usable in the reinforcement of thermoplastic resins can be used.

The plate-like filler refers to those having an aspect ratio (length of the longest side of the largest surface of the plate-like filler/thickness of the surface) of 20 or more and 150 or less. The length of the plate-like filler (length of the longest side in the largest surface) is preferably 1.0 $\mu$m or more, more preferably 5 $\mu$m or more, even more preferably 10 $\mu$m or more, and even more preferably 20 $\mu$m or more, and preferably 150 $\mu$m or less, more preferably 100 $\mu$m or less, even more preferably 50 $\mu$m or less, even more preferably 40 $\mu$m or less, and even more preferably 30 $\mu$m or less, from the viewpoint of obtaining excellent dispersibility in the polyester resin composition, improving flexural modulus, and/or improving loss tangent. The thickness is, but not particularly limited to, preferably 0.01 $\mu$m or more, more preferably 0.05 $\mu$m or more, even more preferably 0.1 $\mu$m or more, and even more preferably 0.2 $\mu$m or more, and preferably 5 $\mu$m or less, more preferably 3 $\mu$m or less, even more preferably 2 $\mu$m or less, even more preferably 1 $\mu$m or less, and even more preferably 0.5 $\mu$m or less, from the same viewpoint. In addition, the aspect ratio of the plate-like filler is preferably 30 or more, more preferably 40 or more, and even more preferably 50 or more, and preferably 120 or less, more preferably 100 or less, even more preferably 90 or less, and even more preferably 80 or less, from the same viewpoint. Specific examples of the plate-like filler include, for example, glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, plate-like barium sulfate, and the like. Among them, talc, mica, and plate-like barium sulfate are preferred, and talc and mica are more preferred, from the viewpoint of improving flexural modulus and suppressing the lowering of loss tangent. The length and thickness of the plate-like filler can be obtained by observing randomly chosen 100 fillers with an optical microscope, and calculating an arithmetic mean thereof.

The granular fillers include not only those showing the true spherical form but also those that are cross-sectional elliptic or nearly elliptic, and have an aspect ratio (longest diameter of the granular filler/shortest diameter of the granular filler) of 1 or more and less than 2, and one having an aspect ratio of nearly 1 is preferred. The average particle size of the granular filler is preferably 1.0 $\mu$m or more, more preferably 5 $\mu$m or more, even more preferably 10 $\mu$m or more, and even more preferably 20 $\mu$m or more, and preferably 50 $\mu$m or less, more preferably 40 $\mu$m or less, and even more preferably 30 $\mu$m or less, from the viewpoint of obtaining excellent dispersibility in the polyester resin composition, improving flexural modulus, and/or improving loss tangent. Specific examples include kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, white clay, and the like. Among them, granular barium sulfate, aluminum hydroxide, and granular calcium carbonate are preferred, and granular calcium carbonate and granular barium sulfate are more preferred, from the viewpoint of improving flexural modulus and improving loss tangent. Here, the diameter of the granular filler can be obtained by cutting 100 randomly chosen fillers, observing the cross sections with an optical microscope, and calculating an arithmetic mean thereof.

The acicular filler refers to those having an aspect ratio (particle length/particle size) within the range of 2 or more and less than 20. The length of the acicular filler (particle length) is preferably 1.0 $\mu$m or more, more preferably 5 $\mu$m or more, even more preferably 10 $\mu$m or more, even more preferably 20 $\mu$m or more, and even more preferably 30 $\mu$m or more, and preferably 150 $\mu$m or less, more preferably 100 $\mu$m or less, even more preferably 80 $\mu$m or less, and even more preferably 60 $\mu$m or less, from the viewpoint of obtaining excellent dispersibility in the polyester resin composition, improving flexural modulus, and/or improving loss tangent. The particle size is, but not particularly limited to, preferably 0.01 $\mu$m or more, more preferably 0.1 $\mu$m or more, and even more preferably 0.5 $\mu$m or more, and preferably 20 $\mu$m or less, more preferably 15 $\mu$m or less, and even more preferably 10 $\mu$m or less, from the same viewpoint. In addition, the aspect ratio of the acicular filler is preferably 5 or more, and preferably 10 or less, from the same viewpoint. Specific examples of the acicular filler include, for example, potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and the like. Among them, potassium titanate whiskers and wollastonite are preferred. Here, the particle length and particle size of the acicular filler can be obtained by observing 100 randomly chosen fillers with an optical microscope, and calculating an arithmetic mean thereof. In a case where the particle size has a length and a breadth, the average particle size is calculated using the length.

The fibrous filler refers to those having an aspect ratio (average fiber length/average fiber diameter) of exceeding 150. The length of the fibrous filler (average fiber length) is preferably 0.15 mm or more, more preferably 0.2 mm or more, even more preferably 0.5 mm or more, and even more preferably 1 mm or more, and preferably 30 mm or less, more preferably 10 mm or less, and even more preferably 5 mm or less, from the viewpoint of improving flexural modulus and improving loss tangent. The average fiber diameter is, but not particularly limited thereto, preferably 1 $\mu$m or more, and more preferably 3 $\mu$m or more, and preferably 30 $\mu$m or less, more preferably 20 $\mu$m or less, and even more preferably 10 $\mu$m or less, from the same viewpoint. In addition, the aspect ratio is preferably 200 or more, more preferably 250 or more, and even more preferably 500 or more, and preferably 10,000 or less, more preferably 5,000 or less, even more preferably 1,000 or less, and even more preferably 800 or less, from the same viewpoint. Specific examples of the fibrous filler include, for example, glass fibers, carbon fibers, graphite fibers, metal fibers, cellulose fibers, and the like. Among them, carbon fibers and glass fibers are preferred, and glass fibers are more preferred, from the same viewpoint. Here, the particle length and particle size of the fibrous filler can be obtained by observing 100 randomly chosen fillers with an optical microscope, and calculating an arithmetic mean thereof. In a case where the particle size has a length and a breadth, the average particle size is calculated using the length. In addition, as the fiber diameter not only those that are in a circular form where a length and a breadth are the same, but also those having different length and breadth such as an elliptic form (for example, length/breadth =4) or an eyebrow form (for example, length/breadth =2) may be used. On the other hand, when a resin and a fibrous filler are melt-kneaded in order to prepare a resin composition using a kneader such as a twin-screw extruder, although the fibrous filler is cut with a shearing force in the kneading portion to shorten the average fiber length, the average fiber length of the fibrous filler in the resin is preferably from 100 to 800 $\mu$m, more preferably from 200 to 700 $\mu$m, and even more preferably from 300 to 600 $\mu$m, from the viewpoint of flexural modulus.

The above granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.

These fillers can be used alone or in a combination of two or more kinds, and fillers having different shapes can be combined. Among them, from the viewpoint of improving flexural modulus and suppressing the lowering of loss tangent, the filler is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers. Specifically, mica, talc, and glass fibers are preferably used, mica and talc are more preferably used, and mica is even more preferably used. The plate-like filler is oriented in the direction of flow in an injection molded article and the like, so that the tensile modulus in the oriented direction and the flexural modulus in an orthogonal direction to the oriented direction are remarkably improved, as compared to other fillers. Also, since there are many interfaces that influence frictions generated upon the vibration of the molded article, it is assumed that a lowering of loss tangent is further suppressed. The content of the plate-like filler is preferably 60% by mass or more, more preferably 80% by mass or more, and even more preferably 90% by mass or more, of the inorganic filler, from the viewpoint of suppressing the lowering of loss tangent.

The content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, from the viewpoint of improving flexural modulus. In addition, the content is preferably 80 parts by mass or less, more preferably 70 parts by mass or less, even more preferably 60 parts by mass or less, even more preferably 50 parts by mass or less, and even more preferably 45 parts by mass or less, from the viewpoint of suppressing the lowering of loss tangent. Here, the content of the inorganic filler refers to a total mass of the inorganic fillers used, and when plural compounds are contained, it means a total content.

In addition, in the polyester resin composition, the content of the inorganic filler is preferably 5% by mass or more, more preferably 10% by mass or more, even more preferably 15% by mass or more, even more preferably 20% by mass or more, and even more preferably 23% by mass or more, from the viewpoint of improving flexural modulus, and the content is preferably 40% by mass or less, more preferably 35% by mass or less, and even more preferably 30% by mass or less, from the viewpoint of suppressing the lowering of loss tangent.

In the present invention, the mass ratio of the component (B) to the inorganic filler (C) (component (B) / inorganic filler (C)) is preferably from 10/90 to 60/40, more preferably from 25/75 to 50/50, and even more preferably from 40/60 to 45/55, from the viewpoint of improving the modulus and improving loss tangent.


[Organic Crystal Nucleating Agent (D)]


In addition, the polyester resin composition of the present invention can contain an organic crystal nucleating agent, from the viewpoint of improving crystallization velocity of the polyester resin, improving crystallinity of the polyester resin, and improving flexural modulus.

As the organic crystal nucleating agent, known organic crystal nucleating agents can be used, and organic metal salts of carboxylic acids, organic sulfonates, carboxylic acid amides, metal salts of phosphorus-containing compounds, metal salts of rosins, alkoxy metal salts, and organic nitrogen-containing compounds, and the like can be used. Specifically, for example, the organic metal salts of carboxylic acids include sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate. The organic sulfonates include sodium p-toluenesulfonate and sodium sulfoisophthalate. The carboxylic acid amides include stearamide, ethylenebis(lauric acid amide), palmitic acid amide, hydroxystearamide, erucic acid amide, trimesic acid tris(t-butylamide). The metal salts of phosphorus-containing compounds include sodium-2,2'-methylenebis(4,6-di-t-butylphenyl) phosphate. The metal salts of rosins include sodium dehydroabietate and sodium dihydroabietate. The alkoxy metal salts include sodium 2,2-methylbis(4,6-di-t-butylphenyl). The organic nitrogen-containing compounds include ADK STAB NA-05 (trade name), manufactured by ADEKA. Other organic crystal nucleating agents include benzylidene sorbitol and derivatives thereof.

The content of the organic crystal nucleating agent (D) is, based on 100 parts by mass of the thermoplastic polyester resin (A), preferably 0.01 parts by mass or more, more preferably 0.1 parts by mass or more, and even more preferably 0.2 parts by mass or more, from the viewpoint of improving flexural modulus and loss tangent, and the content is preferably 20 parts by mass or less, more preferably 10 parts by mass or less, even more preferably 5 parts by mass or less, even more preferably 3 parts by mass or less, and even more preferably 1 part by mass or less, from the viewpoint of improving flexural modulus and loss tangent. Here, in the present specification, the content of the organic crystal nucleating agent means a total content of all the organic crystal nucleating agents contained in the polyester resin composition.

The polyester resin composition of the present invention can contain, as other components besides those mentioned above, an inorganic crystal nucleating agent, a hydrolysis inhibitor, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a blowing agent, or the like, within the range that would not impair the effects of the present invention. In addition, other polymeric materials and other resin compositions can be contained within the range that would not inhibit the effects of the present invention.

The polyester resin composition of the present invention is prepared according to the present claims. The polyester resin composition is prepared by melt-kneading raw materials containing a thermoplastic polyester resin, one or more members selected from the group consisting of plasticizers and styrene-isoprene block copolymers, and an inorganic filler, and further optionally various additives with a known kneader such as a closed kneader, a single-screw or twin-screw extruder, or an open roller-type kneader. After melt-kneading, the melt-kneaded product may be dried or cooled in accordance with a known method. The raw materials can also be subjected to melt-kneading after homogeneously mixing the raw materials with a Henschel mixer, a super mixer or the like in advance. Here, the melt-blending may be carried out in the presence of a supercritical gas in order to accelerate plasticity of the polyester resin when the raw materials are melt-blended.

The melt-kneading temperature cannot be unconditionally determined because the melt-kneading temperature depends upon the kinds of the thermoplastic polyester resin used, and the melt-kneading temperature is preferably 220°C or higher, more preferably 225°C or higher, and even more preferably 230°C or higher, and preferably 300°C or lower, more preferably 290°C or lower, even more preferably 280°C or lower, even more preferably 260°C or lower, even more preferably 250°C or lower, and even more preferably 240°C or lower, from the viewpoint of improving moldability and prevention of deterioration of the polyester resin composition. The melt-kneading time cannot be unconditionally determined because the melt-kneading time depends upon a melt-kneading temperature and the kinds of a kneader, and the melt-kneading time is preferably from 15 to 900 seconds.

The kneaded product thus obtained has excellent vibration-damping property even though flexural modulus is high, so that the kneaded product can be suitably used as manufactured articles such as audio equipment, electric appliances, construction buildings, and industrial equipment, or parts or housing thereof, by using various mold-processing methods such as injection molding, extrusion molding or thermoforming. In addition, since the polyester resin composition of the present invention has a high flexural modulus even as a single material, the polyester resin composition has an excellent vibration-damping property of being capable of sufficiently keeping the shape with a single material without having to use a high-rigidity material such as a metal steel plate, and can be preferably used in manufactured articles that are required to be light-weighted of transportation vehicles such as automobiles, railcars, and airplanes, or parts or housings thereof. In other words, in the present invention, a polyester resin as defined in the present claims can be used as a vibration-damping material.

The application of the polyester resin composition of the present invention to manufactured articles such as audio equipment, electric appliances, transportation vehicles, construction buildings, and industrial equipment, or parts or housings thereof can be appropriately set according to the methods for producing parts, housings, apparatuses, and equipment, applied parts, and intended purposes, and the polyester resin composition can be used in accordance with a conventional method in the art. In other words, the manufactured articles such as audio equipment, electric appliances, transportation vehicles, construction buildings, and industrial equipment, or parts or housing thereof can be obtained by molding a polyester resin composition of the present invention in accordance with a known method.

Specifically, for example, when a part or housing containing the polyester resin composition of the present invention is produced by injection molding, the part or housing is obtained by filling pellets of the above polyester resin composition in an injection-molding machine, and injecting molten pellets in a mold to mold.

In the injection molding, a known injection-molding machine can be used, including, for example, a machine comprising a cylinder and a screw inserted through an internal thereof as main constituting elements, e.g. J75E-D, J110AD-180H manufactured by The Japan Steel Works, Ltd. or the like. Here, although the raw materials for the above-mentioned polyester resin composition may be supplied to a cylinder and directly melt-kneaded, it is preferable that a product previously melt-kneaded is filled in an injection-molding machine.

The set temperature of the cylinder is preferably 220°C or higher, and more preferably 230°C or higher. Also, the set temperature is preferably 290°C or lower, more preferably 280°C or lower, even more preferably 270°C or lower, and even more preferably 260°C or lower. When the melt-kneader is used, the set temperature means the set temperature of the cylinder of the kneader during melt-kneading. Here, the cylinder comprises some heaters, by which temperature control is carried out. The number of heaters audio cannot be unconditionally determined because the number depends on the kinds of machines, and it is preferable that the heaters controlled to the above-mentioned set temperature are present at least at the discharge outlet side of the melt-kneaded product, i.e. the side of tip end of nozzle.

The mold temperature is preferably 150°C or lower, more preferably 140°C or lower, and even more preferably 130°C or lower. Also, the mold temperature is preferably 20°C or higher, more preferably 30°C or higher, and even more preferably 40°C or higher, from the viewpoint of improving the crystallization velocity of the polyester resin composition and improving operability. The holding time inside the mold cannot be unconditionally determined because the holding time differs depending upon the temperature of the mold. The holding time is preferably from 5 to 100 seconds, from the viewpoint of improving productivity of the molded article.

The polyester resin composition of the present invention can be used, for speakers, television, radio cassette players, headphones, audio components, microphones, etc. as materials for audio equipment housings; further electromotive tools such as electromotive drills and electromotive drivers, electric appliances with cooling fans such as computers, projectors, servers, and POS systems, washing machines, clothes dryers, air-conditioned indoor units, sewing machines, dishwashers, fan heaters, multifunctional photocopier machines, printers, scanners, hard disk drives, video cameras, etc. as materials for parts and housings of electric appliances with electromotive motors; electromotive toothbrushes, electromotive shavers, massaging machines, etc. as materials for parts and housings of vibrated source-containing electric appliances; generators, gas generators, etc. as materials for parts and housings of electric appliances with motors; refrigerators, automatic vending machines, air-conditioned external machines, dehumidifiers, domestic generators etc. as materials for parts and housings of electric appliances with compressors; materials for interior materials such as dashboards, instrumental panels, floor, doors, and roofs, and engine-related materials such as oil pans, front cover, and locker cover as materials for automobile parts; interior materials such as floor, walls, side plates, ceiling, doors, chairs, and tables, housings or parts of motor-related area, various protective covers, etc. as materials for railcar parts; interior materials such as floor, walls, side plates, ceiling, chairs, and tables, housings or parts in the engine-related parts etc. as materials for airplane parts; housings or wall materials for engine room, housings or wall materials for instrumental measurement room, as materials for ship parts; walls, ceiling, floor, partition boards, soundproof walls, shutters, curtain rails, pipe ducts, staircases, doors, etc. as materials for construction; shooters, elevators (lifts), escalators, conveyors, tractors, bulldozers, lawn mowers, etc. as materials for industrial equipment parts.

The present invention also provides a method for producing parts or housing containing a polyester resin composition of the present invention.

Specifically, the method includes the following steps:

step (1): melt-kneading a polyester resin composition according to the present claims to prepare a melt-kneaded product of the polyester resin composition; and

step (2): injection-molding a melt-kneaded product of the polyester resin composition obtained in the step (1) in a mold.

The step (1) is the step to prepare a melt-kneaded product of the polyester resin composition. Specifically, the melt-kneaded product can be prepared by melt-kneading raw materials according to the present claims at a temperature of preferably 220°C or higher, more preferably 225°C or higher, and even more preferably 230°C or higher, and preferably 300°C or lower, more preferably 290°C or lower, even more preferably 280°C or lower, even more preferably 260°C or lower, even more preferably 250°C or lower, and even more preferably 240°C or lower.

The step (2) is the step of injection-molding the melt-kneaded product of the polyester resin composition. Specifically, the melt-kneaded product obtained in the step (1) can be molded by filling the melt-kneaded product in an injection-molding machine equipped with a cylinder heated to a temperature of preferably 220°C or higher, and more preferably 230°C or higher, and preferably 290°C or lower, more preferably 280°C or lower, and even more preferably 270°C or lower, and even more preferably 260°C or lower, and injecting in a mold at a temperature of preferably 150°C or lower, more preferably 140°C or lower, and even more preferably 130°C or lower, and preferably 20°C or higher, more preferably 30°C or higher, and even more preferably 40°C or higher.

The injection-molded article of the present invention thus obtained can be suitably used as parts or housings containing a vibration-damping material.

EXAMPLES

The present invention will be described more specifically by means of the following Examples. The examples are given solely for the purposes of illustration and are not to be construed as limitations of the present invention. Parts in Examples are parts by mass unless specified otherwise. Here, "ambient pressure" means 101.3 kPa, and "ambient temperature" means 25°C.

[Glass Transition Temperature of Thermoplastic Polyester Resin and Elastomer]

Using a DMA apparatus (EXSTAR6000, manufactured by SII), a flat test piece (40 mm × 5 mm × 0.4 mm) of the samples prepared in the same manner as described later is heated from -50°C to 250°C at a heating rate of 2°C/min at a measurement frequency of 1 Hz, and a peak temperature of the resulting loss tangent is obtained as a glass transition point.

[Crystallization Enthalpy of Thermoplastic Polyester Resin] About 7 mg of a thermoplastic polyester resin sample is weighed, and using a DSC apparatus (DSC8500, manufactured by Perkin-Elmer), a crystallization enthalpy is calculated from exothermic peaks accompanying crystallization when a resin is, as prescribed in JIS K7122 (1999), is heated from 25°C to 300°C at a heating rate of 20°C/min, held in that state for 5 minutes, and thereafter cooled to 25°C or lower at a rate of -20°C/min.

[Styrene Content of Elastomer]

An elastomer is dissolved in deuterated chloroform, and H-NMR spectrum of the sample solution is measured at an observation width of 15 ppm. In addition, previously, a calibration curve is obtained from peak areas and concentrations of styrene in the H-NMR spectrum of a polystyrene/deuterated chloroform solution for three kinds of concentrations, and a content of styrene is calculated from the peak areas of styrene in the sample solution using this calibration curve.

[Acid Value, Hydroxyl Value, and Saponification Value of Plasticizer]

Acid Value: The analysis is carried out in accordance with a test method as prescribed in JIS K 0070, except that toluene/ethanol = 2/1 (volume ratio) is used as a titration solvent.
Hydroxyl Value: The analysis is carried out in accordance with a test method as prescribed in JIS K 0070, except that acetic anhydride/pyridine = 1/4 (volume ratio) is used as an acetylation reagent, and that the amount is changed to 3 mL.
Saponification Value: The analysis is carried out in accordance with a test method as prescribed in JIS K 0070, except that the temperature of the water bath is changed to 95°C, and that the heating time is changed to one hour.

[Molecular Weight, Terminal Alkyl Esterification Percentage, and Ether Group Value of Ester Compound of (B) of Plasticizer]

Molecular Weight: The molecular weight of the ester compound of (B) as used herein means a number-average molecular weight, which is calculated according to the following formulas from an acid value, a hydroxyl value, and a saponification value:

$$\text{Average Molecular Weight } M$$
$$= (M_1 + M_2 - M_3 \times 2) \times n + M_1 - (M_3 - 17.01) \times 2 + (M_3 - 17.01) \times p +$$
$$(M_2 - 17.01) \times q + 1.01 \times (2 - p - q)$$

$$q = \text{Hydroxyl Value} \times M \div 56110$$

$$2 - p - q = \text{Acid Value} \times M \div 56110$$

$$\text{Average Degree of Polymerization } n$$

$$= \text{Saponification Value} \times M \div (2 \times 56110) - 1$$

Terminal Alkyl Esterification Percentage: The alkyl esterification percentage at the molecular terminals, i.e. the terminal alkyl esterification percentage, can be calculated by the following formula. The larger the numerical value of the alkyl esterification percentage at the molecular terminals, the smaller the number of free carboxyl groups and free hydroxyl groups, showing that the molecular terminals are sufficiently subjected to alkyl esterification.

$$\text{Terminal Alkyl Esterification Percentage (\%)} = (p \div 2) \times 100$$

wherein $M_1$: a molecular weight of a diester obtained from a dicarboxylic acid used as a raw material and a monohydric alcohol used as a raw material;
$M_2$: a molecular weight of a dihydric alcohol used as a raw material;
$M_3$: a molecular weight of a monohydric alcohol used as a raw material;
p: the number of terminal alkyl ester groups in one molecule; and
q: the number of terminal hydroxyl groups in one molecule. Ether Group Value: The ether group value, which is the number of mmol of the ether groups in one gram of a carboxylic acid ester, is calculated in accordance with the following formula.

$$\text{Ether Group Value (mmol/g)} = (m - 1) \times n \times 1000 \div M$$

wherein m is an average number of repeats of oxyalkylene groups, i.e. m-1 stands for the number of ether groups in one molecule of the dihydric alcohol.
Incidentally, in a case where plural kinds of dicarboxylic acids, monohydric alcohols or dihydric alcohols are used, a number-average molecular weight is used as the molecular weight.

Production Example 1 of Plasticizer - Diester Obtained from Succinic Acid and Triethylene Glycol Monomethyl Ether

A 3-L flask equipped with a stirrer, a thermometer, and a dehydration tube was charged with 500 g of succinic anhydride, 2,463 g of triethylene glycol monomethyl ether, and 9.5 g of paratoluenesulfonic acid monohydrate, and the contents were allowed to react at 110°C for 15 hours under a reduced pressure of from 4 to 10.7 kPa, while blowing nitrogen at 500 mL/min in a space portion. The liquid reaction mixture had an acid value of 1.6 mgKOH/g. To the liquid reaction mixture was added 27 g of an adsorbent KYOWAAD 500SH manufactured by Kyowa Chemical Industry Co., Ltd., and the mixture was stirred at 80°C and 2.7 kPa for 45 minutes, and filtered. Thereafter, triethylene glycol monomethyl ether was distilled off at a liquid temperature of from 115° to 200°C and a pressure of 0.03 kPa, and after cooling to 80°C, the residual liquid was filtered under a reduced pressure, to provide a diester obtained from succinic acid and triethylene glycol monomethyl ether as a filtrate. The diester obtained had an acid value of 0.2 mgKOH/g, a saponification value of 276 mgKOH/g, a hydroxyl value of 1 mgKOH/g or less, and a hue APHA of 200.

Production Example 2 of Plasticizer - Diester Obtained from Succinic Acid and 1,3-Propanediol and Methanol, Raw Materials (Molar Ratio): Dimethyl Succinate/1,3-Propanediol (1.5/1)

A four-necked flask equipped with a stirrer, a thermometer, a dropping funnel, a distillation tube, and a nitrogen blowing tube was charged with 521 g (6.84 mol) of 1,3-propanediol and 5.9 g of a 28% by mass sodium methoxide-containing methanol solution (sodium methoxide: 0.031 mol) as a catalyst, and methanol was distilled off, while stirring at 120°C and an ambient pressure for 0.5 hours. Thereafter, 1,500 g (10.26 mol) of dimethyl succinate manufactured by Wako Pure Chemical Industries, Ltd. was added dropwise thereto over 1 hour, and the contents were allowed to react at 120°C and an ambient pressure to distill off methanol formed by the reaction. Next, the temperature was cooled to 60°C, and 5.6 g of a 28% by mass sodium methoxide-containing methanol solution (sodium methoxide: 0.029 mol) was added thereto. The temperature was raised to 120°C over 2 hours, and the pressure was then gradually dropped from an ambient pressure to 3.7 kPa over 1 hour to distill off methanol. Thereafter, the temperature was cooled to 80°C, 18 g of KYOWAAD 600S manufactured by Kyowa Chemical Industry Co., Ltd. was added thereto, and the mixture was stirred at 80°C and a pressure of 4.0 kPa for 1 hour, and then filtered under a reduced pressure. The temperature of the filtrate was raised from 85° to 194°C at a pressure of 0.1 kPa over 2.5 hours to distill off the residual dimethyl succinate, to provide a yellow liquid at an ambient temperature. Here, the amount of the catalyst used was 0.58 mol per 100 mol of the dicarboxylic acid ester (in the formula (I), $R^1$: methyl, $R^2$: ethylene, $R^3$: 1,3-propylene, m=1, n=4.4; acid value: 0.64 mgKOH/g, hydroxyl value: 1.3 mgKOH/g, saponification value: 719.5 mgKOH/g, number-average molecular weight: 850; terminal alkyl esterification percentage: 98.5%; ether group value: 0 mmol/g).

Production Example 3 of Plasticizer - Diester Obtained from Terephthalic Acid and Triethylene Glycol Monomethyl Ether

A four-necked flask equipped with a stirrer, a thermometer, a distillation tube, and a nitrogen blowing tube was charged with 400 g of dimethyl terephthalate, 1,015 g of triethylene glycol monomethyl ether and 0.86 g of tin(II) octylate, and the mixture was stirred at 200°C and an ambient pressure for 14 hours to distill off methanol generated by the reaction, while blowing nitrogen at 200 mL/min in a space portion. Next, the temperature was cooled to an ambient temperature, 30 g of a 85% by mass phosphoric acid-containing triethylene glycol monomethyl ether solution was added thereto, and the mixture was stirred at 60°C and an ambient pressure for 1.5 hours to deactivate the catalyst tin(II) octylate, while blowing nitrogen at 500 mL/min in a space portion. Thereafter, 45 g of an adsorbent KYOWAAD 500SH manufactured by Kyowa Chemical Industry Co., Ltd. was added to the liquid reaction mixture, the mixture was stirred at 60°C and a pressure of 6.7 kPa for 1 hour and filtered, and triethylene glycol monomethyl ether was then distilled off at a liquid temperature of 120° to 150°C and a pressure of 0.02 kPa. After the temperature was cooled to 60°C, the residue liquid was filtered under a reduced pressure, to provide a diester obtained from terephthalic acid and triethylene glycol monomethyl ether in the form of yellow, slightly viscous liquid as a filtrate.

Examples 1 to (Example 28 is inventive. Examples 1-27 and 29 are not inventive) and Comparative Examples 1 to 9

Raw materials for polyester resin compositions as listed in Tables 1 to 6 were melt-kneaded at 240°C with an intermeshing co-rotating twin-screw extruder manufactured by The Japan Steel Works, Ltd., TEX-28V, and strand-cut, to provide pellets of the polyester resin compositions. Here, the pellets obtained were subjected to dehumidification drying at 110°C for 3 hours, to adjust its water content to 500 ppm or less.
The pellets obtained were injection-molded with an injection-molding machine manufactured by The Japan Steel Works, Ltd., J110AD-180H, cylinder temperatures set at 6 locations, of which cylinder temperature was set at 240°C for the sections up to fifth units from the nozzle end side, at 170°C for the remaining one unit, and at 45°C for the section below the hopper, to mold into rectangular test pieces (125 mm × 12 mm × 6 mm), and flat plate test pieces (127 mm × 27 mm × 1.2 mm) at a mold temperature set to 80°C, to provide a molded article of the polyester resin composition.

Examples 3 (Example 32 is inventive, Example 30 and 31 are not inventive) and Comparative Example 10

Raw materials for polyester resin compositions as listed in Table 4 or 6 were melt-kneaded at 280°C with an intermeshing co-rotating twin-screw extruder manufactured by The Japan Steel Works, Ltd., TEX-28V, and strand-cut, to provide pellets of the polyester resin compositions. Here, the pellets obtained were subjected to dehumidification drying at 110°C for 3 hours, to adjust its water content to 500 ppm or less.
The pellets obtained were injection-molded with an injection-molding machine manufactured by The Japan Steel Works, Ltd., J110AD-180H, cylinder temperatures set at 6 locations, of which cylinder temperature was set at 270°C for the sections up to fifth units from the nozzle end side, at 230°C for the remaining one unit, and at 45°C for the section below the hopper, to mold into rectangular test pieces (125 mm × 12 mm × 6 mm), and flat plate test pieces (127 mm × 27 mm × 1.2 mm) at a mold temperature set to 130°C, to provide a molded article of the polyester resin composition.
Here, the raw materials in Tables 1 to 6 are as follows.

[Thermoplastic Polyester Resin]

PBT: A polybutylene terephthalate resin, NOVADURAN 5010R5 manufactured by Mitsubishi Engineering-Plastics Corporation, unreinforced, glass transition temperature: 50°C, crystallization enthalpy ΔHmc: 44 J/g
PTT: A polytrimethylene terephthalate resin, Sorona, a registered trademark, Brite manufactured by Du Pont, unreinforced, glass transition temperature: 50°C, crystallization enthalpy ΔHmc: 52 J/g PET: A polyethylene terephthalate resin, RT-553C manufactured by Japan Unipet Co., Ltd., unreinforced, glass transition point: 70°C, crystallization enthalpy ΔHmc: 42 J/g

[Plasticizer]

DAIFATTY-101: A mixed diester obtained from adipic acid and a 1/1 diethylene glycol monomethyl ether/benzyl alcohol manufactured by DAIHACHI CHEMICAL INDUSTRY CO., LTD.
$(MeEO_3)_2SA$: A diester obtained from succinic acid and triethylene glycol monomethyl ether, produced according to the above Production Example 1 of Plasticizer
MeSA-1,3PD: A diester obtained from succinic acid and 1,3-propanediol and methanol, produced according to the above Production Example 2 of Plasticizer
$(MeEO_3)_2TPA$: A diester obtained from terephthalic acid and triethylene glycol monomethyl ether, produced according to the above Production Example 3 of Plasticizer
DOP: Bis(2-ethylhexyl) phthalate, DOP manufactured by DAIHACHI CHEMICAL INDUSTRY CO., LTD.
DOA: Bis(2-ethylhexyl) adipate, DOA manufactured by DAIHACHI CHEMICAL INDUSTRY CO., LTD.
KP-L115: Bisphenol S dioctyl ether, manufactured by KAO Corporation

[Elastomer]

Styrene-isoprene block copolymer: HYBRAR 5127 manufactured by Kuraray Plastics Co., Ltd., glass transition temperature: 8°C, styrene content: 20% by mass
Polyester elastomer: PELPRENE P-150M manufactured by TOYOBO CO., LTD., glass transition temperature: -25°C

[Inorganic Filler]

Mica: A-21S manufactured by YAMAGUCHI MICA CO., LTD., length of the longest side of the largest side: 23 μm, thickness of the largest side: 0.33 μm, aspect ratio: 70
Mica (aminosilane-treated): MICAKET 21P5 manufactured by YAMAGUCHI MICA CO., LTD., length of the longest side of the largest side: 23 μm, thickness of the largest side: 0.33 μm, aspect ratio: 70
Talc: MICROACE P-6 manufactured by Nippon Talc Co., Ltd., length of the longest side of the largest side: 4 μm, thickness of the largest side: 0.13 μm, aspect ratio: 31
Talc (epoxy resin-treated): P-4 surface-treated product, manufactured by Nippon Talc Co., Ltd., length of the longest side of the largest side: 4.5 μm, thickness of the largest side: 0.13 μm, aspect ratio: 35
Glass Fibers: CSF 3PE-941 manufactured by Nittobo, average fiber length: 3 mm, average fiber diameter: 13 μm, aspect ratio: 231
Glass Fibers (flat cross section): 3PA-820 manufactured by Nittobo, average fiber length: 3 mm, average fiber diameter: 4 μm, aspect ratio: 750

[Crystal Nucleating Agent]

Benzoate Na: Sodium benzoate manufactured by Wako Pure Chemical Industries, Ltd.
NA-05: An organic nitrogen-containing compound manufactured by ADEKA

The properties of the molded articles obtained were evaluated in accordance with the methods of the following Test Examples 1 and 2. The results are shown in Tables 1 to 6.

Test Example 1 - Flexural Modulus

As to rectangular test pieces having dimensions of 125 mm × 12 mm × 6 mm, as prescribed in JIS K7203, a flexural test was carried out with TENSILON manufactured by Orientec Co., LTD., TENSILON Tensile Tester RTC-1210A, with setting a crosshead speed to 3 mm/min to obtain a flexural modulus. It can be judged that a flexural modulus is high, and an initial vibration is small when a flexural modulus is 1.6 GPa or more, and it can be judged that the higher the numerical value, the higher the effects.

Test Example 2 - Loss Tangent

As to flat test pieces having dimensions of 127 mm $\times$ 12.7 mm $\times$ 1.2 mm, as prescribed to JIS G0602, a test piece was fixed to a jig as shown in FIG. 1, and loss tangent was obtained from free damped vibration waveform of flexural vibration by free-fixed impact vibration testing. Maximum Xn of response displacement was detected with a CCD Laser Displacement Sensor, LK-GD5000 manufactured by KEYENCE, and analyzed over time with a FFT Analyzer, Photon II manufactured by ARBROWN CO., LTD. The calculated zone of the response displacement was set at from 3.0 mm to 0.5 mm exception for the response displacement at the time of the initial impact. It can be judged that the loss tangent is high and the damping of vibration is fast when the loss tangent is preferably 0.05 or more, and more preferably 0.06 or more, and it can be judged that the higher the numerical value, the higher the effects.

[Table 1]

Table 1

| | | Examples | | | | | | | | |
|---|---|---|---|---|---|---|---|---|---|---|
| | | 1 | 2 | 3 | 4 | 5 | 6 | 7 | 8 | 9 |
| Resin | PBT | 100 | 100 | 100 | 100 | 100 | 100 | 100 | 100 | 100 |
| Plasticizer | DAIFATTY-101 | 5 | 10 | 15 | 20 | - | - | - | - | - |
| | $(MeEO_3)_2SA$ | - | - | - | - | 15 | - | - | - | - |
| | MeSA-1,3PD | - | - | - | - | - | 15 | - | - | - |
| | $(MeEO_3)_2TPA$ | - | - | - | - | - | - | 15 | - | - |
| | DOP | - | - | - | - | - | - | - | 15 | |
| | DOA | - | - | - | - | - | - | - | - | 15 |
| Elastomer | Styrene-Isoprene Block Copolymer | - | - | - | - | - | - | - | - | - |
| | Polyester Elastomer | - | - | - | - | - | - | - | - | - |
| Inorganic Filler | Mica | 40 | 40 | 40 | 40 | 40 | 40 | 40 | 40 | 40 |
| | Mica (Aminosilane-Treated) | - | - | - | - | - | - | - | - | - |
| | Talc | - | - | - | - | - | - | - | - | - |
| | Glass Fibers | - | - | - | - | - | - | - | - | - |
| | Glass Fibers (Flat Cross Section) | - | - | - | - | - | - | - | - | - |
| Mass Ratio of (Plasticizer and Elastomer) to (Inorganic Filler) [(Plasticizer and Elastomer) / Inorganic Filler] | | 11/89 | 20/80 | 27/73 | 33/67 | 27/73 | 27/73 | 27/73 | 27/73 | 27/73 |

(continued)

| | | Examples | | | | | | | | |
|---|---|---|---|---|---|---|---|---|---|---|
| | | 1 | 2 | 3 | 4 | 5 | 6 | 7 | 8 | 9 |
| Rigidity | Flexural Modulus (GPa) | 3.9 | 3.2 | 2.7 | 2.5 | 2.6 | 3.0 | 2.8 | 3.2 | 3.1 |
| Vibration-Damping Property | Loss Tangent | 0.065 | 0.080 | 0.089 | 0.091 | 0.085 | 0.080 | 0.084 | 0.071 | 0.068 |
| *The amount of the raw materials used is expressed in parts by mass. | | | | | | | | | | |

[Table 2]

Table 2

| | | Examples | | | | | |
|---|---|---|---|---|---|---|---|
| | | 10 | 11 | 12 | 13 | 14 | 15 |
| Resin | PBT | 100 | 100 | 100 | 100 | 100 | 100 |
| Plasticizer | DAIFATTY-101 | - | - | - | - | 15 | 15 |
| | $(MeEO_3)_2SA$ | - | - | - | - | - | - |
| | MeSA-1,3PD | - | - | - | - | - | - |
| | $(MeEO_3)_2TPA$ | - | - | - | - | - | - |
| | DOP | - | - | - | - | - | - |
| | DOA | - | - | - | - | - | - |
| Elastomer | Styrene-Isoprene Block Copolymer | 10 | 18 | 18 | 30 | 15 | 30 |
| | Polyester Elastomer | - | - | - | - | - | - |
| Inorganic Filler | Mica | 40 | 47 | - | 40 | 40 | 40 |
| | Mica (Aminosilane-Treated) | - | - | - | - | - | - |
| | Talc | - | - | - | - | - | - |
| | Glass Fibers | - | - | - | - | - | - |
| | Glass Fibers (Flat Cross Section) | - | - | 47 | - | - | - |
| Mass Ratio of (Plasticizer and Elastomer) to (Inorganic Filler) [(Plasticizer and Elastomer) / Inorganic Filler] | | 20/80 | 28/82 | 28/82 | 43/57 | 43/57 | 53/47 |
| Rigidity | Flexural Modulus (GPa) | 3.8 | 3.9 | 2.9 | 3.7 | 2.4 | 2.0 |
| Vibration-Damping Property | Loss Tangent | 0.064 | 0.086 | 0.061 | 0.118 | 0.133 | 0.197 |
| *The amount of the raw materials used is expressed in parts by mass. | | | | | | | |

[Table 3]

Table 3

| | | Examples | | | | | | | | | |
|---|---|---|---|---|---|---|---|---|---|---|---|
| | | 3 | 16 | 17 | 18 | 19 | 20 | 21 | 22 | 23 | 24 |
| Resin | PBT | 100 | 100 | 100 | 100 | 100 | 100 | 100 | 100 | 100 | 100 |
| Plasticizer | DAIFATTY-101 | 15 | 15 | 15 | 15 | 15 | 15 | 15 | 15 | 15 | 15 |
| | $(MeEO_3)_2SA$ | - | - | - | - | - | - | - | - | - | - |
| | MeSA-1,3PD | - | - | - | - | - | - | - | - | - | - |
| | $(MeEO_3)_2TPA$ | - | - | - | - | - | - | - | - | - | - |
| | DOP | - | - | - | - | - | - | - | - | - | - |
| | DOA | - | - | - | - | - | - | - | - | - | - |
| Elastomer | Styrene-Isoprene Block Copolymer | - | - | - | - | - | - | - | - | - | - |
| | Polyester Elastomer | - | - | - | - | - | - | - | - | - | - |
| Inorganic Filler | Mica | 40 | 15 | 25 | 30 | 55 | 65 | - | - | - | - |
| | Mica (Aminosilane-Treated) | - | - | - | - | - | - | 40 | - | - | - |
| | Talc | - | - | - | - | - | - | - | 40 | - | - |
| | Glass Fibers | - | - | - | - | - | - | - | - | 40 | - |
| | Glass Fibers (Flat Cross Section) | - | - | - | - | - | - | - | - | - | 40 |
| Mass Ratio of (Plasticizer and Elastomer) to (Inorganic Filler) [(Plasticizer and Elastomer) / Inorganic Filler] | | 27/73 | 50/50 | 38/62 | 33/67 | 21/79 | 19/81 | 27/73 | 27/73 | 27/73 | 27/73 |
| Rigidity | Flexural Modulus (GPa) | 2.7 | 1.6 | 2.0 | 2.3 | 3.2 | 4.0 | 2.8 | 2.3 | 2.0 | 2.1 |
| Vibration-Damping Property | Loss Tangent | 0.089 | 0.093 | 0.091 | 0.090 | 0.080 | 0.060 | 0.089 | 0.080 | 0.070 | 0.075 |
| *The amount of the raw materials used is expressed in parts by mass. | | | | | | | | | | | |

[Table 4]

Table 4

| | | | Examples | | | | | | | |
|---|---|---|---|---|---|---|---|---|---|---|
| | | | 25 | 26 | 27 | 28 | 29 | 30 | 31 | 32 |
| Resin | PBT | | 100 | - | - | - | - | - | - | - |
| | PTT | | - | 100 | 100 | 100 | 100 | - | - | - |
| | PET | | - | - | - | - | - | 100 | 100 | 100 |
| Plasticizer | DAIFATTY-101 | | 15 | 15 | - | 15 | - | - | - | - |
| | KP-L115 | | - | - | - | - | - | - | - | 15 |
| Elastomer | Styrene-Isoprene Block Copolymer | | - | - | 30 | 15 | 30 | 30 | 30 | 15 |
| Inorganic Filler | Mica | | 40 | 40 | 40 | 40 | 40 | - | - | - |
| | Talc (Epoxy Resin-Treated) | | - | - | - | - | - | 40 | - | 40 |
| | Glass Fibers | | - | - | - | - | - | - | 40 | - |
| Organic Crystal Nucleating Agent | Benzoate Na | | 0.5 | - | - | - | 0.5 | - | - | - |
| | NA-05 | | - | - | - | - | - | 0.3 | 0.3 | 0.3 |
| Mass Ratio of (Plasticizer and Elastomer) to (Inorganic Filler) [(Plasticizer and Elastomer) / Inorganic Filler] | | | 27/73 | 27/73 | 43/57 | 43/57 | 43/57 | 43/57 | 43/57 | 43/57 |
| Rigidity | Flexural Modulus (GPa) | | 2.9 | 3.4 | 4.6 | 2.8 | 4.7 | 3.4 | 4.5 | 3.1 |
| Vibration-Damping Property | Loss Tangent | | 0.070 | 0.070 | 0.086 | 0.101 | 0.099 | 0.051 | 0.065 | 0.077 |
| The amount of the raw materials used is expressed in parts by mass. | | | | | | | | | | |

[Table 5]

Table 5

| | | Comparative Examples | | | | |
|---|---|---|---|---|---|---|
| | | 1 | 2 | 3 | 4 | 5 |
| Resin | PBT | 100 | 100 | 100 | 100 | 100 |
| Plasticizer | DAIFATTY-101 | - | - | 15 | - | - |
| | $(MeEO_3)_2SA$ | - | - | - | - | - |
| | MeSA-1,3PD | - | - | - | - | - |
| | $(MeEO_3)_2TPA$ | - | - | - | - | - |
| | DOP | - | - | - | - | - |
| | DOA | - | - | - | - | - |

(continued)

| | | Comparative Examples | | | | |
|---|---|---|---|---|---|---|
| | | 1 | 2 | 3 | 4 | 5 |
| Elastomer | Styrene-Isoprene Block Copolymer | - | - | - | 30 | - |
| | Polyester Elastomer | - | - | - | - | 18 |
| Inorganic Filler | Mica | - | 40 | - | - | - |
| | Mica (Aminosilane-Treated) | - | - | - | - | - |
| | Talc | - | - | - | - | - |
| | Glass Fibers | - | - | - | - | - |
| | Glass Fibers (Flat Cross Section) | - | - | - | - | 47 |
| Mass Ratio of (Plasticizer and Elastomer) to (Inorganic Filler) [(Plasticizer and Elastomer) / Inorganic Filler] | | - | - | 0 | 0 | 28/82 |
| Rigidity | Flexural Modulus (GPa) | 2.2 | 4.0 | 0.6 | 1.4 | 2.7 |
| Vibration-Damping Property | Loss Tangent | 0.012 | 0.009 | 0.102 | 0.067 | 0.022 |
| *The amount of the raw materials used is expressed in parts by mass. | | | | | | |

[Table 6]

Table 6

| | | Comparative Examples | | | | |
|---|---|---|---|---|---|---|
| | | 6 | 7 | 8 | 9 | 10 |
| Resin | PTT | 100 | 100 | 100 | 100 | - |
| | PET | - | - | - | - | 100 |
| Plasticizer | DAIFATTY-101 | - | - | 15 | - | - |
| Elastomer | Polyester Elastomer | - | - | - | 30 | - |
| Inorganic Filler | Mica | - | 40 | - | - | - |
| Organic Crystal Nucleating Agent | NA-05 | - | - | - | - | 0.3 |
| Mass Ratio of (Plasticizer and Elastomer) to (Inorganic Filler) [(Plasticizer and Elastomer) / Inorganic Filler] | | - | - | 0 | 0 | 0 |
| Rigidity | Flexural Modulus (GPa) | 2.6 | 6.0 | 1.0 | 1.2 | 2.8 |
| Vibration-Damping Property | Loss Tangent | 0.010 | 0.005 | 0.080 | 0.050 | 0.014 |
| *The amount of the raw materials used is expressed in parts by mass. | | | | | | |

As a result, as shown in Tables 1 to 6, Examples 1 to 32 had high effects in both of the flexural modulus and the loss tangent as compared to Comparative Examples 1 to 10. It can be seen from the results that rigidity and vibration-damping property can be improved by blending a plasticizer and/or a styrene-isoprene block copolymer, and an inorganic filler to various thermoplastic polyester resins, thereby suggesting applications to various uses. In addition, it can be seen that the loss tangent can be even more increased while keeping high flexural modulus by using a plasticizer and a styrene-isoprene block copolymer in a combination (Examples 14 and 15). It can be seen from the comparison of Example 3 with Examples 14 to 21 that both of the flexural modulus and the loss tangent are increased by using plate-like fillers, preferably mica, among the inorganic fillers.

INDUSTRIAL APPLICABILITY

The polyester resin composition of the present invention can be suitably used as a vibration-damping material for a material for audio equipment such as, for example, speakers, television, radio cassette players, headphones, audio components, or microphones, and manufactured articles, such as electric appliances, transportation vehicles, construction buildings, and industrial equipment, or parts or housing thereof.

**Claims**

1.   A polyester resin composition for a vibration-damping material, comprising

(i) a thermoplastic polyester resin constituted of a dicarboxylic acid component and a diol component (A), one or more members selected from a mixture of plasticizers and styrene-isoprene block copolymers (B), and an inorganic filler (C), or
(ii) a crystalline thermoplastic polyester resin constituted of a dicarboxylic acid component and a diol component (A), one or more members selected from a mixture of plasticizers and styrene-isoprene block copolymers (B), and an inorganic filler (C) where crystalline refers to a resin in which exothermic peaks accompanying crystallisation are observed using the method given in the present specification

2.   The polyester resin composition according to claim 1, wherein the component (B) comprises one or more members selected from the group consisting of the following Compound Groups (A) and (B):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average, per one hydroxyl group; and
Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different, and that all of $R^3$'s may be identical or different.

3.   The polyester resin composition according to claim 1 wherein the component (B) comprises the following Compound Group (C):
Compound Group (C): an ester compound having two or more ester groups in the molecule, wherein the alcohol component constituting the ester compound is a mono-alcohol.

4.   The polyester resin composition according to claim anyone of the claims 1 to 3, wherein the component (B) comprises one or more members selected from the group consisting of the following Compound Groups (A), (B) and (C):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average per one hydroxyl group;
Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different; and
Compound Group (C): an ester compound having two or more ester groups in the molecule, wherein the alcohol component constituting the ester compound is a mono-alcohol.

5. The polyester resin composition according to any one of claims 1 to 4, wherein the component (B) comprises a styrene-isoprene block copolymer, and one or more members selected from the group consisting of the following Compound Groups (A) to (C):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average, per one hydroxyl group;
Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different, and that all of $R^3$'s may be identical or different; and
Compound Group (C): an ester compound having two or more ester groups in the molecule, wherein the alcohol component constituting the ester compound is a mono-alcohol.

6. The polyester resin composition according to any one of claims 1 to 5, wherein the dicarboxylic acid component in the thermoplastic polyester resin (A) comprises one or more members selected from the group consisting of aliphatic dicarboxylic acids, alicyclic dicarboxylic acids, aromatic dicarboxylic acids, and dicarboxylic acids having a furan structure.

7. The polyester resin composition according to any one of claims 1 to 6, wherein the diol component in the thermoplastic polyester resin (A) comprises one or more members selected from the group consisting of aliphatic diols, alicyclic diols, aromatic diols, and diols having a furan structure.

8. The polyester resin composition according to any one of claims 1 to 7, wherein the thermoplastic polyester resin (A) comprises one or more members selected from the group consisting of a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol.

9. The polyester resin composition according to any one of claims 1 to 8, wherein the content of the thermoplastic polyester resin (A) is 30% by mass or more and 80% by mass or less of the polyester resin composition.

10. The polyester resin composition according to any one of claims 1 to 9, wherein the content of the plasticizer is 1 part by mass or more and 30 parts by mass or less, based on 100 parts by mass of the thermoplastic polyester resin (A).

11. The polyester resin composition according to any one of claims 1 to 10, wherein the styrene-isoprene block copolymer is a block copolymer that has polystyrene blocks at both the terminals, and at least one of the blocks of polyisoprene block or vinyl-polyisoprene block therebetween.

12. The polyester resin composition according to any one of claims 1 to 11, wherein the inorganic filler (C) is a plate-like filler.

13. The polyester resin composition according to any one of claims 1 to 12, wherein the inorganic filler (C) is mica.

14. The polyester resin composition according to any one of claims 1 to 13, wherein a total content of the plasticizer and the styrene-isoprene block copolymer is 15 parts by mass or more and 60 parts by mass or less, based on 100 parts by mass of the thermoplastic polyester resin (A).

15. A vibration-damping material comprising a polyester resin composition as defined in any one of claims 1 to 14.

16. Use of a polyester resin composition as defined in any one of claims 1 to 13 as a vibration-damping material.

17. A manufactured article selected from audio equipment, electric appliances, transportation vehicles, construction buildings, and industrial equipment, obtainable by molding a polyester resin composition as defined in any one of claims 1 to 14, or parts or housing thereof.

18. A method for producing parts or housing, comprising the following steps:

step (1): melt-kneading (i) a polyester resin composition comprising a thermoplastic polyester resin (A), one or more members selected from a mixture of plasticizers and styrene-isoprene block copolymers (B), and an inorganic filler (C), or

(ii) a polyester resin composition comprising a crystalline thermoplastic polyester resin constituted of a dicarboxylic acid component and a diol component (A),
one or more members selected from a mixture of plasticizers and styrene-isoprene block copolymers (B), and an inorganic filler (C) to prepare a melt-kneaded product of a polyester resin composition; and

step (2): injection-molding a melt-kneaded product of a polyester resin composition obtained in the step (1) in a mold.

19. The method for producing parts or housing according to claim 18, wherein the component (B) comprises one or more members selected from the group consisting of the following Compound Groups (A) and (B):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average, per one hydroxyl group; and
Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different, and that all of $R^3$'s may be identical or different.

20. The method for producing parts or housing according to claim 18 wherein the component (B) comprises the following Compound Group (C):
Compound Group (C): an ester compound having two or more ester groups in the molecule, wherein the alcohol component constituting the ester compound is a mono-alcohol.

21. The method for producing parts or housing according to any one of claims 18 to 20, wherein the component (B) comprises one or more members selected from the group consisting of the following Compound Groups (A), (B) and (C):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average per one hydroxyl group;
Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different; and
Compound Group (C): an ester compound having two or more ester groups in the molecule, wherein the alcohol component constituting the ester compound is a mono-alcohol.

22. The method for producing parts or housing according to any one of claims 18 to 21, wherein the component (B) comprises a styrene-isoprene block copolymer, and one or more members selected from the group consisting of the following Compound Groups (A) to (C):

Compound Group (A): an ester compound containing two or more ester groups in the molecule, wherein at least one kind of the alcohol component constituting the ester compound is an adduct of an alcohol added with an alkylene oxide having from 2 to 3 carbon atoms in an amount of from 0.5 to 5 mol on average, per one hydroxyl group;

Compound Group (B): a compound represented by the formula (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

wherein $R^1$ is an alkyl group having from 1 to 4 carbon atoms; $R^2$ is an alkylene group having from 2 to 4 carbon atoms; $R^3$ is an alkylene group having from 2 to 6 carbon atoms, m is the number of from 1 to 6, and n is the number of from 1 to 12, with proviso that all of $R^2$'s may be identical or different, and that all of $R^3$'s may be identical or different; and

Compound Group (C): an ester compound having two or more ester groups in the molecule, wherein the alcohol component constituting the ester compound is a mono-alcohol.

## Patentansprüche

1. Polyesterharzzusammensetzung für ein VibrationsDämpfungsmaterial, enthaltend:

(i) ein thermoplastisches Polyesterharz, konstituiert aus einer Dicarbonsäurekomponente und einer Diolkomponente (A),
ein oder mehrere Mitglieder, ausgewählt aus einer Mischung von Plastifizierern und Styrol-Isopren-Blockcopolymeren (B) und
einen anorganischen Füllstoff (C), oder
(ii) ein kristallines thermoplastisches Polyesterharz, konstituiert aus einer Dicarbonsäurekomponente und einer Diolkomponente (A),
ein oder mehrere Mitglieder, ausgewählt aus einer Mischung von Plastifizierern und Styrol-Isopren-Blockcopolymeren (B) und
einen anorganischen Füllstoff (C), worin kristallin ein Harz betrifft, worin exotherme Peaks, die die Kristallisierung begleiten, während des Verfahrens beobachtet werden, das in dieser Beschreibung angegeben ist.

2. Polyesterharzzusammensetzung gemäß Anspruch 1, worin die Komponente (B) ein oder mehrere Mitglieder enthält, ausgewählt aus der Gruppe, bestehend aus den folgenden Verbindungsgruppen (A) und (B):

Verbindungsgruppe (A): eine Esterverbindung, die zwei oder mehrere Estergruppen im Molekül enthält, worin zumindest eine Art der Alkoholkomponente, die die Esterverbindung konstituiert, ein Addukt von einem Alkohol ist, zu dem ein Alkylenoxid mit 2 bis 3 Kohlenstoffatomen in einer Menge von 0,5 bis 5 mol im Durchschnitt pro einer Hydroxylgruppe zugegeben ist, und
Verbindungsgruppe (B): eine Verbindung mit der Formel (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle von $R^2$ identisch oder verschieden sein können und dass alle von $R^3$ identisch oder verschieden sein können.

3. Polyesterharzzusammensetzung gemäß Anspruch 1, worin die Komponente (B) die folgende Verbindungsgruppe (C) enthält:
Verbindungsgruppe (C): eine Esterverbindung mit zwei oder mehreren Estergruppen im Molekül, worin die Alkoholkomponente, die die Esterverbindung konstituiert, ein Monoalkohol ist.

4. Polyesterharzzusammensetzung gemäß einem der Ansprüche 1 bis 3, worin die Komponente (B) ein oder mehrere Mitglieder enthält, ausgewählt aus der Gruppe, bestehend aus den folgenden Verbindungsgruppen (A), (B) und (C):

Verbindungsgruppe (A): Esterverbindung, die zwei oder mehrere Estergruppen im Molekül enthält, worin zumindest eine Art der Alkoholkomponente, die die Esterverbindung konstituiert, ein Addukt eines Alkohols ist, das mit einem Alkylenoxid mit 2 bis 3 Kohlenstoffatomen in einer Menge von 0,5 bis 5 mol im Durchschnitt pro einer Hydroxylgruppe versetzt ist,

Verbindungsgruppe (B): Verbindung mit der Formel (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle Gruppen $R^2$ identisch oder verschieden sein können, und

Verbindungsgruppe (C): eine Esterverbindung mit zwei oder mehreren Estergruppen im Molekül, worin die Alkoholkomponente, die die Esterverbindung konstituiert, ein Monoalkohol ist.

5. Polyesterharzzusammensetzung gemäß einem der Ansprüche 1 bis 4, worin die Komponente (B) ein Styrol-Isopren-Blockcopolymer und ein oder mehrere Mitglieder, ausgewählt aus der Gruppe, bestehend aus den folgenden Verbindungsgruppen (A) bis (C), enthält:

Verbindungsgruppe (A): Esterverbindung mit zwei oder mehreren Estergruppen im Molekül, worin zumindest eine Art der Alkoholkomponente, die die Esterverbindung konstituiert, ein Addukt eines Alkohols ist, versetzt mit einem Alkylenoxid mit 2 bis 3 Kohlenstoffatomen in einer Menge von 0,5 bis 5 mol im Schnitt pro einer Hydroxylgruppe,

Verbindungsgruppe (B): Verbindung mit der Formel (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle Gruppen $R^2$ identisch oder verschieden sein können, und dass alle Gruppen $R^3$ identisch oder verschieden sein können, und

Verbindungsgruppe (C): Esterverbindung mit zwei oder mehreren Estergruppen im Molekül, worin die Alkoholkomponente, die die Esterverbindung konstituiert, ein Monoalkohol ist.

6. Polyesterharzzusammensetzung gemäß einem der Ansprüche 1 bis 5, worin die Dicarbonsäurekomponente in dem thermoplastischen Polyesterharz (A) ein oder mehrere Mitglieder enthält, ausgewählt aus der Gruppe, bestehend aus aliphatischen Dicarbonsäuren, alicyclischen Dicarbonsäuren, aromatischen Dicarbonsäuren und Dicarbonsäuren mit einer Furanstruktur.

7. Polyesterharzzusammensetzung gemäß einem der Ansprüche 1 bis 6, worin die Diolkomponente in dem thermoplastischen Polyesterharz (A) ein oder mehrere Mitglieder enthält, ausgewählt aus der Gruppe, bestehend aus aliphatischen Diolen, alicyclischen Diolen, aromatischen Diolen und Diolen mit einer Furanstruktur.

8. Polyesterharzzusammensetzung gemäß einem der Ansprüche 1 bis 7, worin das thermoplastische Polyesterharz (A) ein oder mehrere Mitglieder enthält, ausgewählt aus der Gruppe, bestehend aus einem Polyethylenterephthalat, gebildet aus Terephthalsäure und Ethylenglykol, einem Polytrimethylenterephthalat, gebildet aus Terephthalsäure und 1,3-Propandiol, Polybutylenterephthalat, gebildet aus Terephthalsäure und 1,4-Butandiol, Polyethylennaphthalat, gebildet aus 2,6-Naphthalindicarbonsäure und Ethylenglykol und Polyethylenfuranoat, gebildet aus 2,5-Furandicarbonsäure und Ethylenglykol.

9. Polyesterharzzusammensetzung gemäß einem der Ansprüche 1 bis 8, worin der Gehalt des thermoplastischen Polyesterharzes (A) 30 Masse-% oder mehr und 80 Masse-% oder weniger der Polyesterharzzusammensetzung ist.

10. Polyesterharzzusammensetzung gemäß einem der Ansprüche 1 bis 9, worin der Gehalt des Plastifizierers 1 Masseteil oder mehr und 30 Masseteile oder weniger ist, bezogen auf 100 Masseteile des thermoplastischen Polyesterharzes (A).

11. Polyesterharzzusammensetzung gemäß einem der Ansprüche 1 bis 10, worin das Styrol-Isopren-Blockcopolymer ein Blockcopolymer ist, das Polystyrolblöcke an beiden Enden und zumindest einen Polyisoprenblock oder Vinyl-Polyisopren-Block dazwischen aufweist.

12. Polyesterharzzusammensetzung gemäß einem der Ansprüche 1 bis 11, worin der anorganische Füllstoff (C) ein Plättchen-artiger Füllstoff ist.

13. Polyesterharzzusammensetzung gemäß einem der Ansprüche 1 bis 12, worin der anorganische Füllstoff (C) Mika ist.

14. Polyesterharzzusammensetzung gemäß einem der Ansprüche 1 bis 13, worin ein Gesamtgehalt des Plastifizierers und des Styrol-Isopren-Blockcopolymers 15 Masseteile oder mehr und 60 Masseteile oder weniger ist, bezogen auf 100 Masseteile des thermoplastischen Polyesterharzes (A) .

15. Vibrationsdämpfungsmaterial, enthaltend eine Polyesterharzzusammensetzung wie in einem der Ansprüche 1 bis 14 definiert.

16. Verwendung einer Polyesterharzzusammensetzung, wie in einem der Ansprüche 1 bis 13 definiert, als Vibrationsdämpfungsmaterial.

17. Hergestellter Gegenstand, ausgewählt aus Audioanlagen, elektrischen Anwendungen, Transportfahrzeugen, Konstruktionsgebäudematerialien und industriellen Anlagen, erhältlich durch Formen einer Polyesterharzzusammensetzung wie in einem der Ansprüche 1 bis 14 definiert, oder Teile oder Gehäuse davon.

18. Verfahren zur Erzeugung von Teilen oder Gehäuse, enthaltend die folgenden Schritte:

Schritt (1): Schmelzkneten von (i) einer Polyesterharzzusammensetzung, enthaltend ein thermoplastisches Polyesterharz (A),

ein oder mehrere Mitglieder, ausgewählt aus einer Mischung von Plastifizierern und Styrol-Isopren-Blockcopolymeren (B) und
einen anorganischen Füllstoff (C) oder
(ii) einer Polyesterharzzusammensetzung, enthaltend ein kristallines thermoplastisches Polyesterharz, das sich aus einer Dicarbonsäurekomponente und einer Diolkomponente zusammensetzt (A),
ein oder mehrere Mitglieder, ausgewählt aus einer Mischung von Plastifizierern und Styrol-Isopren-Blockcopolymeren (B) und
einen anorganischen Füllstoff (C),
zur Herstellung eines schmelzgekneteten Produkts aus einer Polyesterharzzusammensetzung, und

Schritt (2): Injektionsformen eines schmelzgekneteten Produktes aus einer Polyesterharzzusammensetzung, erhalten im Schritt (1), in einer Form.

19. Verfahren zur Erzeugung von Teilen oder Gehäuse gemäß Anspruch 18, worin die Komponente (B) ein oder mehrere Mitglieder enthält, ausgewählt aus der Gruppe, bestehend aus den folgenden Verbindungsgruppen (A) und (B):

Verbindungsgruppe (A): eine Esterverbindung, die zwei oder mehrere Estergruppen im Molekül enthält, worin zumindest eine Art der Alkoholkomponente, die die Esterverbindung konstituiert, ein Addukt von einem Alkohol ist, zu dem ein Alkylenoxid mit 2 bis 3 Kohlenstoffatomen in einer Menge von 0,5 bis 5 mol im Durchschnitt pro einer Hydroxylgruppe zugegeben ist, und
Verbindungsgruppe (B): eine Verbindung mit der Formel (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle von $R^2$ identisch oder verschieden sein können und dass alle von $R^3$ identisch oder verschieden sein können.

20. Verfahren zur Erzeugung von Teilen oder Gehäuse gemäß Anspruch 18, worin die Komponente (B) die folgende Verbindungsgruppe (C) enthält:
Verbindungsgruppe (C): eine Esterverbindung mit zwei oder mehreren Estergruppen im Molekül, worin die Alkoholkomponente, die die Esterverbindung konstituiert, ein Monoalkohol ist.

**21.** Verfahren zur Erzeugung von Teilen oder Gehäuse gemäß einem der Ansprüche 18 bis 20, worin die Komponente (B) ein oder mehrere Mitglieder enthält, ausgewählt aus der Gruppe, bestehend aus den folgenden Verbindungsgruppen (A), (B) und (C) :

Verbindungsgruppe (A): Esterverbindung, die zwei oder mehrere Estergruppen im Molekül enthält, worin zumindest eine Art der Alkoholkomponente, die die Esterverbindung konstituiert, ein Addukt eines Alkohols ist, der mit einem Alkylenoxid mit 2 bis 3 Kohlenstoffatomen in einer Menge von 0,5 bis 5 mol im Durchschnitt pro einer Hydroxylgruppe versetzt ist,
Verbindungsgruppe (B): Verbindung mit der Formel (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle Gruppen $R^2$ identisch oder verschieden sein können, und
Verbindungsgruppe (C): eine Esterverbindung mit zwei oder mehreren Estergruppen im Molekül, worin die Alkoholkomponente, die die Esterverbindung konstituiert, ein Monoalkohol ist.

**22.** Verfahren zur Erzeugung von Teilen oder Gehäuse gemäß einem der Ansprüche 18 bis 21, worin die Komponente (B) ein Styrol-Isopren-Blockcopolymer und ein oder mehrere Mitglieder enthält, ausgewählt aus der Gruppe, bestehend aus den folgenden Verbindungsgruppen (A) bis (C):

Verbindungsgruppe (A): Esterverbindung mit zwei oder mehrere Estergruppen im Molekül, worin zumindest eine Art der Alkoholkomponente, die die Esterverbindung konstituiert, ein Addukt eines Alkohols ist, versetzt mit einem Alkylenoxid mit 2 bis 3 Kohlenstoffatomen in einer Menge von 0,5 bis 5 mol im Schnitt pro einer Hydroxylgruppe,
Verbindungsgruppe (B): Verbindung mit der Formel (I):

$$R^1O\text{-}CO\text{-}R^2\text{-}CO\text{-}[(OR^3)_mO\text{-}CO\text{-}R^2\text{-}CO\text{-}]_nOR^1 \qquad (I)$$

worin $R^1$ eine Alkylgruppe mit 1 bis 4 Kohlenstoffatomen ist, $R^2$ eine Alkylengruppe mit 2 bis 4 Kohlenstoffatomen ist, $R^3$ eine Alkylengruppe mit 2 bis 6 Kohlenstoffatomen ist, m die Zahl von 1 bis 6 ist und n die Zahl von 1 bis 12 ist, mit dem Vorbehalt, dass alle Gruppen $R^2$ identisch oder verschieden sein können, und dass alle Gruppen $R^3$ identisch oder verschieden sein können, und
Verbindungsgruppe (C): Esterverbindung mit zwei oder mehreren Estergruppen im Molekül, worin die Alkoholkomponente, die die Esterverbindung konstituiert, ein Monoalkohol ist.

## Revendications

**1.** Une composition de résine polyester pour un matériau d'amortissement des vibrations, comprenant

(i) une résine polyester thermoplastique constitué d'un composant acide dicarboxylique et d'un composant diol (A),
un ou plusieurs élément(s) choisi(s) parmi un mélange de plastifiants et de copolymères en bloc styrène-isoprène, et
un agent de remplissage inorganique (C), ou
(ii) une résine polyester thermoplastique cristalline constituée d'un composant acide dicarboxylique et d'un composant diol (A),
un ou plusieurs élément(s) choisi(s) parmi un mélange de plastifiants et de copolymères en bloc styrène-isoprène (B), et
un agent de remplissage inorganique (C) où cristalline se réfère à une résine dans laquelle des pics exothermiques accompagnant la cristallisation sont observés en utilisant la méthode donnée dans la présente spécification.

**2.** La composition de résine polyester selon la revendication 1, dans laquelle le composant (B) comprend un ou plusieurs élément(s) choisi(s) parmi le groupe constitué des groupes de composés (A) et (B) suivants :

> Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ; et
> Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle $R^1$ est un groupe alkyle ayant de 1 à 4 atomes de carbone ; $R^2$ est un groupe alcylène ayant de 2 à 4 atomes de carbone ; $R^3$ est un groupe alcylène ayant de 2 à 6 atomes de carbone, m est le nombre de 1 à 6, et n est la nombre de 1 à 12, à la condition que tous les $R^2$s peuvent être identiques ou différents, et que tous les $R^3$s peuvent être identiques ou différents.

3. La composition de résine polyester selon la revendication 1, dans laquelle le composant (B) comprend le groupe de composé (C) suivant :
Groupe de composés (C) : un composé ester ayant deux ou plus de deux groupes ester dans la molécule, dans lequel le composé alcool constituant le composé ester est un mono-alcool.

4. La composition de résine polyester selon l'une quelconque des revendications 1 à 3, dans laquelle le composant (B) comprend un ou plusieurs élément(s) choisi(s) parmi le groupe constitué des groupes de composés (A), (B) et (C) suivants :

> Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ;
> Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle $R^1$ est un groupe alkyle ayant de 1 à 4 atomes de carbone ; $R^2$ est un groupe alcylène ayant de 2 à 4 atomes de carbone ; $R^3$ est un groupe alcylène ayant de 2 à 6 atomes de carbone, m est le nombre de 1 à 6, et n est le nombre de 1 à 12, à la condition que tous les $R^2$s peuvent être identiques ou différents, et que tous les $R^3$s peuvent être identiques ou différents ; et
> Groupe de composés (C) : un composé ester ayant deux ou plus de deux groupes ester dans la molécule, dans lequel le composé alcool constituant le composé ester est un mono-alcool.

5. La composition de résine polyester selon l'une quelconque des revendications 1 à 4, dans laquelle le composant (B) comprend un copolymère en bloc styrène-isoprène, et un ou plusieurs élément(s) choisi(s) parmi le groupe constitué des groupes de composés (A), (B) et (C) suivants :

> Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ;
> Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle $R^1$ est un groupe alkyle ayant de 1 à 4 atomes de carbone ; $R^2$ est un groupe alcylène ayant de 2 à 4 atomes de carbone ; $R^3$ est un groupe alcylène ayant de 2 à 6 atomes de carbone, m est le nombre de 1 à 6, et n est le nombre de 1 à 12, à la condition que tous les $R^2$s peuvent être identiques ou différents, et que tous les $R^3$s peuvent être identiques ou différents ; et
> Groupe de composés (C) : un composé ester ayant deux ou plus de deux groupes ester dans la molécule, dans lequel le composé alcool constituant le composé ester est un mono-alcool.

**6.** La composition de résine polyester selon l'une quelconque des revendications 1 à 5, dans laquelle le composant acide dicarboxylique dans la résine polyester thermoplastique (A) comprend un ou plusieurs élément(s) choisi(s) parmi le groupe constitué des acides dicarboxyliques aliphatiques, des acides dicarboxyliques alicycliques, des acides dicarboxyliques aromatiques, et des acides dicarboxyliques ayant une structure de furane.

**7.** La composition de résine polyester selon l'une quelconque des revendications 1 à 6, dans laquelle le composant diol dans la résine polyester thermoplastique (A) comprend un ou plusieurs élément(s) choisi(s) parmi le groupe constitué des diols aliphatiques, des diols alicycliques, des diols aromatiques, et des diols ayant une structure de furane.

**8.** La composition de résine polyester selon l'une quelconque des revendications 1 à 7, dans laquelle la résine polyester thermoplastique (A) comprend un ou plusieurs élément(s) choisi(s) parmi le groupe constitué d'un téréphtalate de polyéthylène constitué d'acide téréphtalique et de glycol d'éthylène, un téréphtalate de polytriméthylène constitué d'acide téréphtalique et de 1,3-propanediol, un téréphtalate de polybutylène constitué d'acide téréphtalique et de 1,4-butanediol, un naphtalate de polyéthylène constitué d'acide 2,6-naphtalènedicarboxylique et de glycol d'éthylène, et un furanoate de polyéthylène constitué d'acide 2,5-furandicarboxylique et de glycol d'éthylène.

**9.** La composition de résine polyester selon l'une quelconque des revendications 1 à 8, dans laquelle la teneur de la résine polyester thermoplastique (A) est de 30% en masse ou plus et 80% en masse ou moins de la composition de résine polyester.

**10.** La composition de résine polyester selon l'une quelconque des revendications 1 à 9, dans laquelle la teneur du plastifiant est de 1 partie en masse ou plus et 30 parties en masse ou moins, sur la base de 100 parties en masse de la résine polyester thermoplastique (A).

**11.** La composition de résine polyester selon l'une quelconque des revendications 1 à 10, dans laquelle le copolymère en bloc styrène-isoprène est un copolymère en bloc qui a des blocs polystyrène aux deux extrémités, et au moins l'un des blocs de bloc polyisoprène ou de bloc vinyle-polyisoprène entre.

**12.** La composition de résine polyester selon l'une quelconque des revendications 1 à 11, dans laquelle l'agent de remplissage inorganique (C) est un agent de remplissage plat.

**13.** La composition de résine polyester selon l'une quelconque des revendications 1 à 12, dans laquelle l'agent de remplissage inorganique (C) est le mica.

**14.** La composition de résine polyester selon l'une quelconque des revendications 1 à 13, dans laquelle une teneur totale du plastifiant et du copolymère en bloc styrène-isoprène est de 15 parties en masse ou plus et 60 parties en masse ou moins, sur la base de 100 parties en masse de la résine polyester thermoplastique (A).

**15.** Matériau d'amortissement des vibrations comprenant une composition de résine polyester telle que définie dans l'une quelconque des revendications 1 à 14.

**16.** Utilisation d'une composition de résine polyester telle que définie dans l'une quelconque des revendications 1 à 13 en tant qu'un matériau d'amortissement des vibrations.

**17.** Article manufacturé choisi parmi un équipement audio, des appareils électriques, des véhicules de transport, des bâtiments de construction, et un équipement industriel, obtenu en moulant une composition de résine polyester telle que définie dans l'une quelconque des revendications 1 à 14, ou des pièces ou boîtier de celles-ci.

**18.** Procédé de production de pièces ou boîtier, comprenant les étapes suivantes :

étape (1) : malaxage à l'état fondu (i) une composition de résine polyester comprenant
une résine polyester thermoplastique (A),
un ou plusieurs élément(s) choisi(s) parmi un mélange de plastifiants et de copolymères en bloc styrène-isoprène (B), et
un agent de remplissage inorganique (C), ou
(ii) une composition de résine polyester comprenant une résine polyester thermoplastique cristalline constitué d'un composant acide dicarboxylique et d'un composant diol (A),

un ou plusieurs élément(s) choisi(s) parmi un mélange de plastifiants et de copolymères en bloc styrène-isoprène (B), et

un agent de remplissage inorganique (C),

pour préparer un produit malaxé à l'état fondu d'une composition de résine polyester ; et

étape (2) : moulage par injection d'un produit malaxé à l'état fondu d'une composition de résine obtenue dans l'étape (1) dans un moule.

**19.** Le procédé de production de pièces ou boîtier selon la revendication 18, dans lequel le composant (B) comprend un ou plusieurs élément(s) choisi(s) parmi le groupe constitué des groupes de composés (A) et (B) suivants :

Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ; et

Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle $R^1$ est un groupe alkyle ayant de 1 à 4 atomes de carbone ; $R^2$ est un groupe alcylène ayant de 2 à 4 atomes de carbone ; $R^3$ est un groupe alcylène ayant de 2 à 6 atomes de carbone, m est le nombre de 1 à 6, et n est le nombre de 1 à 12, à la condition que tous les $R^2$s peuvent être identiques ou différents, et que tous les $R^3$s peuvent être identiques ou différents.

**20.** Le procédé de production de pièces ou boîtier selon la revendication 18, dans lequel le composant (B) comprend le groupe de composés (C) suivant :

Groupe de composés (C) : un composé ester ayant deux ou plus de deux groupes ester dans la molécule, dans lequel le composé alcool constituant le composé ester est un mono-alcool.

**21.** Le procédé de production de pièces ou boîtier selon l'une quelconque des revendications 18 à 20, dans lequel le composant (B) comprend un ou plusieurs élément(s) choisi(s) parmi le groupe constitué des groupes de composés (A), (B) et (C) suivants :

Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ;

Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle $R^1$ est un groupe alkyle ayant de 1 à 4 atomes de carbone ; $R^2$ est un groupe alcylène ayant de 2 à 4 atomes de carbone ; $R^3$ est un groupe alcylène ayant de 2 à 6 atomes de carbone, m est le nombre de 1 à 6, et n est le nombre de 1 à 12, à la condition que tous les $R^2$s peuvent être identiques ou différents, et que tous les $R^3$s peuvent être identiques ou différents ; et

Groupe de composés (C) : un composé ester ayant deux ou plus de deux groupes ester dans la molécule, dans lequel le composé alcool constituant le composé ester est un mono-alcool.

**22.** Le procédé de production de pièces ou boîtier selon l'une quelconque des revendications 18 à 21, dans lequel le composant (B) comprend un copolymère en bloc styrène-isoprène, et un ou plusieurs élément(s) choisi(s) parmi le groupe constitué des groupes de composés (A), (B) et (C) suivants :

Groupe de composés (A) : un composé ester contenant deux ou plusieurs groupes ester dans la molécule, dans lequel au moins une sorte du composant alcool constituant le composé ester est un adduit d'un alcool ajouté avec un oxide d'alcylène ayant de 2 à 3 atomes de carbone dans une quantité de 0,5 à 5 mol en moyenne, pour un groupe hydroxyle ;

Groupe de composés (B) : un composé représenté par la formule (I) :

$$R^1O\text{-}CO\text{-}R^2\text{-}CO\text{-}[(OR^3)_mO\text{-}CO\text{-}R^2\text{-}CO\text{-}]_nOR^1 \qquad (I)$$

dans laquelle R$^1$ est un groupe alkyle ayant de 1 à 4 atomes de carbone ; R$^2$ est un groupe alcylène ayant de 2 à 4 atomes de carbone ; R$^3$ est un groupe alcylène ayant de 2 à 6 atomes de carbone, m est le nombre de 1 à 6, et n est le nombre de 1 à 12, à la condition que tous les R$^2$s peuvent être identiques ou différents, et que tous les R$^3$s peuvent être identiques ou différents ; et

Groupe de composés (C) : un composé ester ayant deux ou plus de deux groupes ester dans la molécule, dans lequel le composé alcool constituant le composé ester est un mono-alcool.

[FIG. 1]

FIG. 1

Laser Displacement
Sensor

Test
Piece

PC

FFT

AMP

Fixing Jig

70mm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007009143A A
- JP 10205576 A
- JP HEI3263457 B
- WO 2014034636 A